# EUROPEAN PATENT SPECIFICATION

(11) **EP 4 351 119 B1**
(45) Date of publication and mention of the grant of the patent: **12.08.2026**
(21) Application number: 22810506.0
(22) Date of filing: 23.05.2022
(51) Int. Cl.: H04M 3/42, H04M 1/72469, H04M 3/02, H04M 1/82

(54) **CALL PROCESSING METHODS, ELECTRONIC DEVICE, STORAGE MEDIUM, CHIP AND COMPUTER PROGRAM**
VERFAHREN ZUR ANRUFVERARBEITUNG, ELEKTRONISCHES GERÄT, SPEICHERMEDIUM, CHIP UND COMPUTERPROGRAMM
PROCÉDÉS DE TRAITEMENT D'APPELS, DISPOSITIF ÉLECTRONIQUE, SUPPORT DE STOCKAGE, PUCE ET PROGRAMME INFORMATIQUE

(30) Priority: 28.05.2021 CN 202110591525
(43) Date of publication of application: 10.04.2024
(73) Proprietor: Vivo Mobile Communication Co., Ltd., Dongguan, Guangdong 523863 (CN)
(72) Inventor: WANG, Jieping, Dongguan, Guangdong 523863 (CN)
(74) Representative: Murgitroyd & Company
(86) International application number: PCT/CN2022/094448
(87) International publication number: WO 2022/247781

(56) References cited:
- EP-A1- 3 429 238
- CN-A- 101 047 741
- CN-A- 104 918 276
- CN-A- 105 517 191
- CN-A- 110 300 436
- CN-A- 112 788 183
- CN-A- 113 329 127
- CN-A- 114 051 070

## Description

### TECHNICAL FIELD

This application belongs to the field of communications, and in particular, relates to a call processing method, a call processing apparatus, an electronic device, and a medium.

### BACKGROUND

During communication, affected by a complex communication channel, call establishment may fail. During the call establishment, regardless of a problem with a link between a calling party and a network or a link between a called party and the network, there may be a phenomenon that a called side does not perform a ringing reminder and a called user cannot sense that there is an incoming call. In this case, important calling-party information may be lost.

Existing missed-call reminder methods generally involve detecting, through a calling side or a network side, whether a call connection fails, and sending, by the calling side or the network side, a reminder message to the called side in a case that the call connection fails. However, the failure of the call connection may be caused by the problem with the link between the calling party and the network or the link between the called party and the network. As a result, the called side cannot receive the reminder message in time, and a user cannot learn a missed call in time. Therefore, an existing missed-call reminder method has poor real-time performance. EP3429238A1 discloses that the called UE interrupts the MT signaling interaction with the core network device based on the received SIP exception message within the first duration (in other words, before the timer 1 expires). As a result, the incoming call of the calling UE calling the called UE fails to be answered. The calling UE does not call the called UE again by using the core network device within the second duration (in other words, before the timer 2 expires). To be specific, the call request message sent by the core network device is not received by the called UE again within the second duration (in other words, before the timer 2 expires). In this case, the called UE may further determine, by using the state, that the MT signaling interaction between the called UE and the core network device thoroughly fails, and perform S412: The called UE sends prompt information to a called user.

### SUMMARY

Objects of the invention are two interrelated methods as well as a corresponding device, storage medium, chip and computer program product as claimed in each appended independent claim respectively, the claimed objects addressing the problem that the existing missed-call reminder method has poor real-time performance. Preferred embodiments are covered by the appended dependent claims. The invention is set out in the appended set of claims.

In a first aspect, an embodiment of this application provides a cell processing method, applied to a first call processing apparatus, the method including:
receiving a first call request sent by a second call processing apparatus;
establishing a call connection with the second call processing apparatus according to the first call request;
receiving second missed-call reminder information sent by the second call processing apparatus through a target processing apparatus in a case that the call connection is terminated; and
outputting missed-call reminder information according to the second missed-call reminder information;
where the target processing apparatus includes at least one of the following: a first processing apparatus capable of establishing a device-to-device D2D connection with the first call processing apparatus, and a second processing apparatus capable of establishing a D2D connection with the second call processing apparatus.

In a second aspect, an embodiment of this application provides a cell processing method, applied to a second call processing apparatus, the method including:
sending a first call request to a first call processing apparatus, where the first call request is used for establishing a call connection with the first call processing apparatus;
detecting, in a case that the call connection is terminated, whether a second ringing message is received, where the second ringing message is sent by the first call processing apparatus based on the first call request; and
sending second missed-call reminder information to the first call processing apparatus through a target processing apparatus in a case that the second ringing message is not received;
where the target processing apparatus includes at least one of the following: a first processing apparatus capable of establishing a D2D connection with the first call processing apparatus, and a second processing apparatus capable of establishing a D2D connection with the second call processing apparatus.

In a third aspect, an embodiment of this application provides an electronic device. The electronic device includes a processor, a memory, and a program or an instruction stored in the memory and executable on the processor, and when the program or the instruction is executed by the processor, steps of at least one of the following methods are implemented: steps of the method according to the first aspect, and steps of the method according to the second aspect.

In an fourth aspect, an embodiment of this application provides a readable storage medium, the readable storage medium storing a program or an instruction, where, when the program or the instruction is executed by a processor, steps of at least one of the following methods are implemented: steps of the method according to the first aspect, and steps of the method according to the second aspect.

In an fifth aspect, an embodiment of this application provides a chip, where the chip includes a processor and a communication interface, the communication interface is coupled to the processor, and the processor is configured to run a program or an instruction to implement steps of at least one of the following methods: steps of the method according to the first aspect, and steps of the method according to the second aspect.

In a sixth aspect, an embodiment of this application provides a computer program product, where the computer program product is stored in a non-volatile readable storage medium, and the computer program product is executed by at least one processor to implement steps of the method as described in the first aspect, or the computer program product is executed by at least one processor to implement steps of the method as described in the second aspect.

### BRIEF DESCRIPTION OF THE DRAWINGS

FIG. 1 is a first flowchart of a call processing method according to an embodiment of this application;
FIG. 2 is a first schematic diagram of an interface of a first call processing apparatus according to an embodiment of this application;
FIG. 3 is a second schematic diagram of an interface of a first call processing apparatus according to an embodiment of this application;
FIG. 4 is a third schematic diagram of an interface of a first call processing apparatus according to an embodiment of this application;
FIG. 5 is a fourth schematic diagram of an interface of a first call processing apparatus according to an embodiment of this application;
FIG. 6 is a second flowchart of a call processing method according to an embodiment of this application;
FIG. 7 is a third flowchart of a call processing method according to an embodiment of this application;
FIG. 8 is a first schematic diagram of a communication link according to an embodiment of this application;
FIG. 9 is a second schematic diagram of a communication link according to an embodiment of this application;
FIG. 10 is a third schematic diagram of a communication link according to an embodiment of this application;
FIG. 11 is a first structural diagram of a call processing apparatus according to an embodiment of this application;
FIG. 12 is a second structural diagram of a call processing apparatus according to an embodiment of this application;
FIG. 13 is a third structural diagram of a call processing apparatus according to an embodiment of this application;
FIG. 14 is a first structural diagram of an electronic device according to an embodiment of this application; and
FIG. 15 is a second structural diagram of an electronic device according to an embodiment of this application.

### DETAILED DESCRIPTION

The technical solutions in embodiments of this application are clearly and completely described in the following with reference to the accompanying drawings in the embodiments of this application.

The terms "first" and "second" in the specification and claims of this application are used to distinguish similar objects, but are not used to describe a specific order or sequence. It is to be understood that data used in this way is interchangeable under appropriate circumstances, so that the embodiments of this application described herein can be implemented in an order different from the order shown or described herein. In addition, the objects distinguished by "first" and "second" are generally of a same type, without limiting a quantity of objects. For example, there may be one or more first objects. In addition, "and/or" in the specification and the claims represents at least one of the connected objects, and the character "/" generally indicates an "or" relationship between the associated objects.

A call processing method provided in the embodiments of this application is described in detail below with reference to the accompanying drawings by using embodiments and application scenarios thereof.

Generally, to establish a call connection between a calling party and a called party, multiple signaling transmissions between the calling party, a network side, and the called party are required. Taking circuit switched fallback (Circuit Switched Fallback, CSFB) communication as an example, if the calling party needs to initiate a call request to the called party, the calling party may first send an extended service request (Extended Service Request) signaling to a long term evolution (Long Term Evolution, LTE) network. After the LTE network receives the signaling, the LTE network may send a CS service notification (Circuit Switched Service Notification) signaling when a called device is in a connected state. When the called device is in an idle state, the LTE network sends a paging (Paging) signaling.

After the called party receives the CS service notification signaling or the paging (Paging) signaling, the called party determines that a call request exists, and may send an extended service request (Extended Service Request) signaling to the long term evolution (Long Term Evolution, LTE) network to notify the calling party that the called party has received the call request.

In this case, a call network may change from the LTE network to a wide band code division multiple access (Wide band Code Division Multiple Access, WCDMA)/global system for mobile communications (Global System for Mobile Communications, GSM) network, and the call enters a call initiated (Call Initiated) state. Then, through multiple signaling interactive transmissions between the calling party and the network side and between the calling party and the called party, a call state changes from the call initiated (Call Initiated) state to a call received (Call Received) state, and a ringing (Ringing) signaling is sent to the calling party through the network side. In this case, the called party executes a ringing reminder, and the calling party may also hear a dial tone after receiving the ringing (Ringing) signaling.

However, after the call enters the call initiated (Call Initiated) state, the network may be abnormal. For example, pre-signaling cannot be normally received or sent due to an unstable wireless link. In these cases, the call state may not enter the call received (Call Received) state. Therefore, the called party may not perform a ringing reminder, and a called user cannot sense the call. As a result, user services may be affected.

Based on this, an embodiment of this application provides a call processing method. The method may be performed by a first call processing apparatus. The first call processing apparatus may be a called side during a call. A user of the first call processing apparatus is a called user. The method includes the following steps:

Step 101: The first call processing apparatus receives a first call request sent by a second call processing apparatus.

Step 102: The first call processing apparatus establishes a call connection with the second call processing apparatus according to the first call request.

Step 103: The first call processing apparatus detects a first ringing message corresponding to the first call request in a case that the call connection is terminated.

Step 104: The first call processing apparatus outputs missed-call reminder information in a case that the first ringing message is not detected.

In step 101, the second call processing apparatus may be a calling side during the call, a user of the second call processing apparatus is a calling user, and the first call request may be generated through dialing input performed by the user of the second call processing apparatus to the second call processing apparatus, sent by the second call processing apparatus to a network side, and sent by the network side to the first call processing apparatus. Specifically, the first call request may be sent to a network-side device in a form of signaling, and then sent by the network-side device to the first call processing apparatus. It may be understood that the network-side device may be a device in any type of networks such as an LTE, a standalone (Standalone, SA) network, a non-standalone (Non-Standalone, NSA) network, and a WiFi (WiFi) network, and may specifically be disposed according to a call scenario, which is not limited herein.

For example, in a CSFB call, in a case that the second call processing apparatus receives dialing input of the user, a CS service notification (Circuit Switched Service Notification) signaling may be sent to the LTE network when the second call processing apparatus is in a connected state. A paging (Paging) signaling may be sent to the LTE network when the second call processing apparatus is in an idle state. The signaling, after being received at the network side, is sent to the first call processing apparatus, which means that the first call processing apparatus receives the first call request sent by the second call processing apparatus.

In an IP Multimedia Subsystem (IMS) call, in a case that both a calling party and a called party have registered with an IMS network, the second call processing apparatus may send an invite (Invite) signaling to the network side. The signaling is then sent from the network side to the first call processing apparatus, which means that the first call processing apparatus receives the first call request sent by the second call processing apparatus. Specific signaling content may be set according to an actual call scenario. Details are not described herein again.

In step 102, after receiving the first call request, the first call processing apparatus may establish the call connection with the second call processing apparatus according to the first call request.

The first call request may carry information of the second call processing apparatus. For example, both the CS service notification (Circuit Switched Service Notification) signaling in the CSFB call, the invite (Invite) signaling in the IMS call, and a setup (SETUP) signaling may carry information such as a device number of the second call processing apparatus and a call ID used for identifying a call. The first call processing apparatus may perform signaling interaction with the second call processing apparatus through the network side according to the device number of the second call processing apparatus. A process of establishing the call connection is a process of performing signaling interaction between the first call processing apparatus and the second call processing apparatus through the network side.

Further, in the process of establishing the call connection, if the first call processing apparatus generates a ringing message corresponding to the first call request, it indicates that the first call processing apparatus senses the call and sends the ringing message to the second call processing apparatus through the network side. In a case that the second call processing apparatus receives the ringing message, it indicates that the first call processing apparatus has performed a ringing reminder. In this case, the user of the first call processing apparatus may sense the call and may select, on an incoming call reminder interface through touch input, whether to make a call connection with the second call processing apparatus.

In the process of establishing the call connection, if a communication link between the first call processing apparatus and the network side or between the second call processing apparatus and the network side is abnormal, the first call processing apparatus and the second call processing apparatus cannot establish a call connection. For example, in the process of establishing the call connection, if the first call processing apparatus or the second call processing apparatus does not receive a signaling sent from the network-side device for a long time, it may be determined that the call connection fails to be established, and the first call processing apparatus or the second call processing apparatus may terminate the call connection when the call connection fails to be established.

It is to be noted that, if the first call processing apparatus and the second call processing apparatus can establish a call connection, the first call processing apparatus may perform a ringing reminder, and the call connection may be terminated according to input of the user of the second call processing apparatus or the user of the first call processing apparatus, including, but not limited to, tapping, by the user of the second call processing apparatus, a hang-up button on an outgoing-call interface when the first call processing apparatus performs the ringing reminder; tapping a hang-up button on a call interface after an outgoing-call request of the user of the second call processing apparatus is answered; tapping, by the user of the first call processing apparatus, a hang-up button on an incoming-call prompt interface when the first call processing apparatus performs the ringing reminder; and tapping, by the user of the first call processing apparatus, the hang-up button on the call interface after answering an incoming call. That is, regardless of whether the call connection is successfully established, the call connection may eventually enter a terminated state. Therefore, after the first call processing apparatus receives the first call request, there is a need to determine whether the user senses the call when the call connection between the first call processing apparatus and the second call processing apparatus is terminated, and the missed-call reminder information is outputted in a case that the user does not sense the call.

If the first call processing apparatus and the second call processing apparatus cannot establish a call connection, the first call processing apparatus cannot generate the ringing message, and the first call processing apparatus may not correspondingly perform the ringing reminder. Therefore, the user of the first call processing apparatus cannot sense the call on the first call processing apparatus, and there is a need to output the missed-call reminder information to perform a missed-call reminder.

In step 103, the first call processing apparatus may determine, in a case that the call connection is terminated, whether the user of the first call processing apparatus senses the call by detecting whether the ringing message is generated.

Specifically, in some embodiments, the first call processing apparatus may store both the generated signaling and the received signaling at a target storage position in the process of establishing the call connection, so that the first call processing apparatus can determine, by detecting whether the ringing message is stored at the target storage position, whether the first call processing apparatus generates the first ringing message, thereby determining whether the first call processing apparatus performs the ringing reminder, that is, whether the user of the first call processing apparatus senses the call.

The first ringing message may be the ringing (Ringing) signaling in the CSFB call, or may alternatively include, but not limited to, ringing (Ringing) signalings in a voice over LTE (Voice over LTE, VoLTE) call, an evolved packet system feedback (Evolved Packet System Feedback, EPSFB) call, a video over LTE (Video over LTE, ViLTE) call, a voice over WiFi (Voice over WiFi, VoWiFi) call, a video over WiFi (Video over WiFi, ViWiFi) call, and a voice over new radio (Voice over New Radio, VoNR), and may be specifically set according to an actual call scenario, which is not further limited herein.

Further, in step 104, in a case that the first call processing apparatus does not generate the ringing message, the missed-call reminder information is outputted, so as to inform the user of the first call processing apparatus of occurrence of a missed call in time when the user does not sense the call request from the first call processing apparatus, thereby realizing a missed-call reminder.

Specifically, the above manner of outputting the missed-call reminder information may be set according to an actual requirement. Exemplarily, in some embodiments, the first call processing apparatus may display a text message including missed-call reminder information on a target interface. In some embodiments, the first call processing apparatus may alternatively display a missed-call sign, and output the missed-call reminder information after the user taps the missed-call sign, which is not further limited herein. Certainly, in some embodiments, the first call processing apparatus may alternatively output the missed-call reminder information by voice, which is not further limited herein.

In this embodiment of this application, the first call processing apparatus may establish the call connection with the second call processing apparatus after receiving the first call request sent by the second call processing apparatus, detect, in a case that the call connection is terminated, whether the first ringing message corresponding to the first call request exists, and output the missed-call reminder information in a case that the first ringing message is not detected. In this way, whether the first ringing message exists is locally detected by the first call processing apparatus, and the missed-call reminder information is outputted in a case that the first ringing message is not detected, which can prevent the problem that the first call processing apparatus cannot receive the missed-call reminder information in time due to an abnormal communication link between the second call processing apparatus and the network-side device or between the first call processing apparatus and the network-side device when the second call processing apparatus sends the missed-call reminder information to the first call processing apparatus, so that the user of the first call processing apparatus can learn a missed call in time, thereby improving real-time performance of the missed-call reminder.

Optionally, step 104 may specifically include:
obtaining, by the first call processing apparatus, first call information of the second call processing apparatus according to the first call request in a case that the first ringing message is not detected, where the first call information includes a calling-party number;
querying, by the first call processing apparatus, a preset database for calling-party information corresponding to the calling-party number, where the calling-party information includes at least one of the following: calling-party name information, calling-party home location information, and calling-party social account information; and
displaying, by the first call processing apparatus, first missed-call reminder information according to the first call information and the calling-party information.

As can be seen from the above content, the first call request may be a call signaling, and the call signaling may generally include information of the second call processing apparatus. For example, both the CS service notification (Circuit Switched Service Notification) signaling in the CSFB call and the invite (Invite) signaling in the IMS call may carry information such as a device number of the second call processing apparatus and a call ID used for identifying a call. In this embodiment of this application, the first call information may be generated based on the information carried in the signaling corresponding to the first call request.

Specifically, in an optional implementation, the first call processing apparatus may obtain the first call information in a manner of extracting the calling-party number carried in the call signaling. At the same time, when the first call processing apparatus receives the above first call request, the first call processing apparatus may record a time when the first call request is received. The above first call information may also include an incoming-call time.

In the case of a missed call, the communication link between the first call processing apparatus and the network-side device may be abnormal. Therefore, if there is a need to further obtain information of the second call processing apparatus such as a calling-party home location and a calling user name, the first call processing apparatus may query the preset database for the information of the second call processing apparatus through the calling-party number. It is to be understood that, to prevent delay of a query result caused by the abnormal communication link between the first call processing apparatus and the network-side device, the preset database may be a local database of the first call processing apparatus.

The calling-party information may include at least one of the following: calling-party name information, calling-party home location information, and calling-party social account information. For example, in an optional implementation, the preset database may include address book data of the first call processing apparatus, and the first call processing apparatus may first query, through the calling-party number, whether there is a corresponding contact in the address book data. If the corresponding contact exists, name information, home location information, and social account information of the contact corresponding to the calling-party number may be obtained through a remark name, a social account number, an address, an email address, and the like in the address book data.

In the address book data, contact information generally includes only contact names. Therefore, the preset database may further include number home location data, and the first call processing apparatus may search, according to the calling-party number, the number home location data for a home location corresponding to the calling-party number. In an optional implementation, the first call processing apparatus may alternatively perform analog input to the calling-party number on a dial panel, and the first call processing apparatus may call the preset database according to an entered number to query for the home location, thereby obtaining home location information corresponding to the calling-party number.

The first missed-call reminder information may include the first call information and the calling-party information, that is, include information such as a call number, an incoming-call time, a name, a social account, and a home location, to inform the user of a specific caller and an incoming-call time. Exemplarily, the first call processing apparatus may display missed-call reminder information "the user whose mobile phone number is XXXXX calls at 8:21", so that the user can learn the information of the second call processing apparatus in time after the missed call occurs.

In this embodiment of this application, since the first call information may include the calling-party number, and the calling-party information may include calling-party name information, calling-party home location information, and calling-party social account information, so that, after the missed call occurs, the user can obtain a number and a home location corresponding to the second call processing apparatus as well as a calling user name, a social account, and the like in time, facilitating the user to determine a calling user according to the above information and perform processing operations such as calling back after the missed call and sending a message through social software.

Further, the displaying first missed-call reminder information according to the first call information and the calling-party information includes:
displaying, by the first call processing apparatus, the first missed-call reminder information on a target interface, where the first missed-call reminder information includes the first call information and the calling-party information, and the target interface further includes a first control and a second control;
sending, by the first call processing apparatus in a case that a first input of a user for the first control is received, a second call request to the second call processing apparatus according to the calling-party number in response to the first input; and
querying and displaying, by the first call processing apparatus, in a case that a second input of the user for the second control is received, social account information associated with the calling-party number in response to the second input.

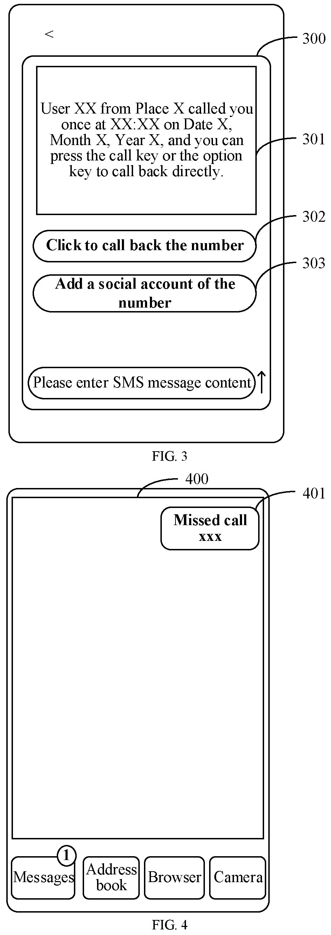

In this embodiment of this application, the first call processing apparatus may display, on the target interface, the first missed-call reminder information including the first call information and the calling-party information. Specifically, the target interface may be a notification interface of an application program. As shown in FIG. 3, FIG. 3 is a possible target interface according to an embodiment of this application. In this case, the target interface may be an SMS notification interface 300, and the first missed-call reminder information 301 may specifically be "User XX from Place X called you once at XX:XX on Date X, Month X, Year X, and you can press the call key or the option key to call back directly". Certainly, in another optional implementation, the target interface may alternatively be an incoming-call notification interface, a social application program notification interface, or the like. Details are not described herein again.

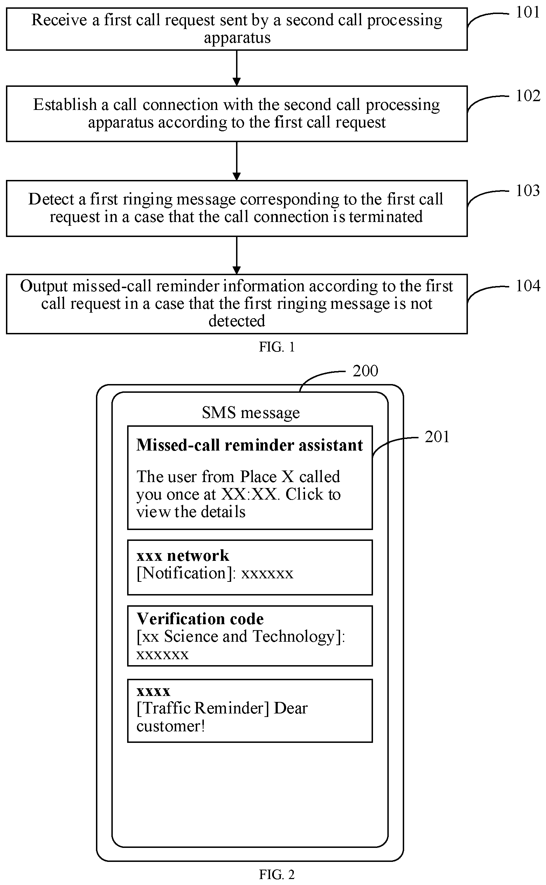

A manner in which the target interface is displayed may be set according to an actual requirement. In an optional implementation, an electronic device may automatically jump to the target interface after a missed call occurs. In an optional implementation, the target interface may alternatively be displayed by the first call processing apparatus according to input by a user. For example, the first call processing apparatus may display a missed-call reminder sign on an SMS application icon on a system desktop in advance, and the user, after starting an SMS application program, may enter an SMS message list interface 200 shown in FIG. 2. In this case, a list option of the first missed-call reminder information 201 may be displayed on top, and the SMS notification interface 300 as shown in FIG. 3 may be displayed after touch input of the user to the list option of the first missed-call reminder information 201 is received, so as to obtain details of the first missed-call reminder information 301.

Further, the target interface may further include a first control and a second control, and in a case that a first input of a user for the first control is received, the first call processing apparatus may send a second call request to the second call processing apparatus according to the calling-party number in response to the first input.

In a case that a second input of the user for the second control is received, social account information associated with the calling-party number is queried and displayed in response to the second input.

Specifically, as shown in FIG. 3, in the SMS notification interface 300, a callback option may be displayed on the first control 302, and when the first input of the user for the first control 302 is received, the first call processing apparatus may send the second call request to the second call processing apparatus according to the calling-party number, which realizes a callback operation.

The first input may be touch input of the user, for example, input of the user such as single-tap, double-tap, or long-press on the first control 302. Certainly, in another optional implementation, the first input may alternatively be voice input or gesture input of the user on the first control 302.

An option of adding a social account of the number may be displayed on the second control 303. When receiving the second input of the user for the second control 303, the first call processing apparatus may query and display, according to the calling-party number, the social account information associated with the calling-party number, so that the user can contact the calling user through social software according to the social account information. The second input is similar to the first input. To avoid repetition, details are not described herein again.

In this embodiment of this application, the first call processing apparatus may display the first missed-call reminder information including the first call information and the calling-party information on the target interface, so that, when a missed call occurs, the user can learn the call information and the calling-party information in time, the first call processing apparatus is caused to perform a callback operation through the first input to the first control in the target interface, and the first call processing apparatus is caused to perform an operation of querying for an associated social account through the second input to the second control in the target interface, facilitating the user to contact the calling user in time after the missed call occurs, and improving operational convenience of the user.

Optionally, the displaying first missed-call reminder information according to the first call information and the calling-party information further includes at least one of the following:
displaying, by the first call processing apparatus, an incoming-call record including the first call information and the calling-party information on an incoming-call notification interface; and
displaying, by the first call processing apparatus, a reminder sign at a target position on a current display interface.

Referring to FIG. 4 to FIG. 5, in the embodiments of this application, to enable the user to notice in time that a missed call occurs when using the first call processing apparatus, in an optional implementation, the first call processing apparatus may display the incoming-call record including the first call information and the calling-party information on the incoming-call notification interface.

It may be understood that, similar to the SMS notification interface, the incoming-call notification interface may perform display according to input by a user, and the first call processing apparatus may display an incoming-call reminder sign on a dial application icon on the system desktop, and display the incoming-call record including the first call information and the calling-party information on the incoming-call notification interface after the user starts a dial application program.

Certainly, in an optional implementation, the first call processing apparatus may display a reminder sign at a target position on a current display interface, so as to remind the user that there is a missed call. The target position may be set according to an actual requirement. As shown in FIG. 4 to FIG. 5, in a case that the first call processing apparatus performs display in landscape or portrait, a reminder sign 401 may be suspended and displayed in an upper right corner of a current display interface 400 of the first call processing apparatus, and a reminder sign 501 may be suspended and displayed in an upper right corner of a current display interface 500 and include words "missed calls", so that a problem that the user fails to detect a missed call in time when using the first call processing apparatus to watch a video or play a game can be prevented, further improving real-time performance of the missed-call reminder.

Further, the reminder sign may be an interaction button at the same time. When the user performs first touch input on the interaction button, such as taps the reminder sign, the electronic device may jump to the SMS notification interface or incoming-call notification interface, so that the user can obtain details of the first missed-call reminder information in time. When the user performs second touch input on the interaction button, such as slides on the reminder sign left and right, the electronic device may hide the reminder sign to prevent an influence on the operation of the user, thereby further improving use experience of the user.

In this embodiment of this application, the first call processing apparatus may alternatively display the incoming-call record including the first call information and the calling-party information on the incoming-call notification interface and/or display the reminder sign at the target position on the current display interface, which can further prevent missing of the first missed-call reminder information by the user during the use of the first call processing apparatus, thereby improving real-time performance of the missed-call reminder.

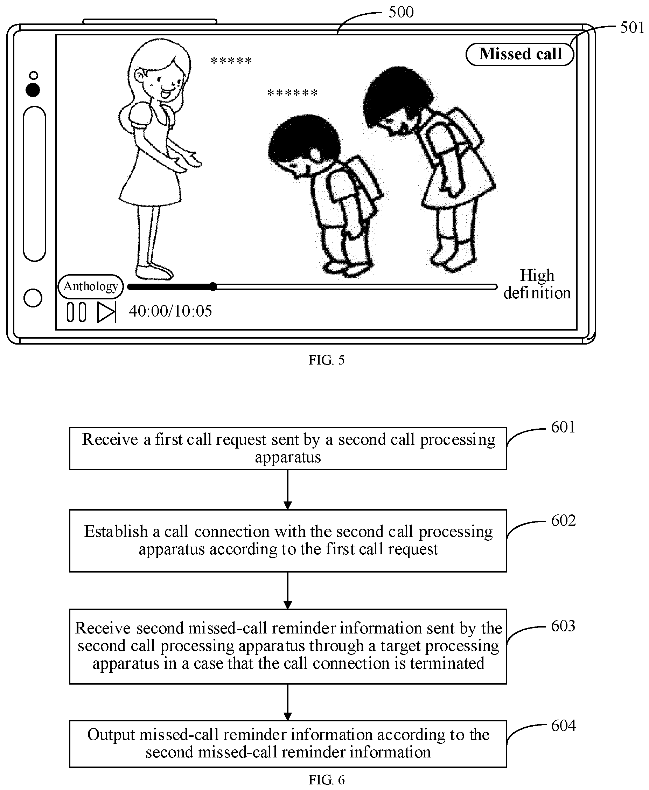

The delay of the missed-call reminder is generally caused by the problem with the link between the calling party and the network or the link between the called party and the network. Based on this, referring to FIG. 6, an embodiment of this application further provides a call processing method. The method may be performed by a first call processing apparatus. The method includes the following steps:
Step 601: The first call processing apparatus receives a first call request sent by a second call processing apparatus.
Step 602: The first call processing apparatus establishes a call connection with the second call processing apparatus according to the first call request.
Step 603: The first call processing apparatus receives second missed-call reminder information sent by the second call processing apparatus through a target processing apparatus in a case that the call connection is terminated.
Step 604: The first call processing apparatus outputs missed-call reminder information according to the second missed-call reminder information.

The target processing apparatus includes at least one of the following: a first processing apparatus capable of establishing a device-to-device (Device-to-Device, D2D) connection with the first call processing apparatus, and a second processing apparatus capable of establishing a D2D connection with the second call processing apparatus.

In this embodiment of this application, the second call processing apparatus may alternatively detect whether a second ringing message sent by the first call processing apparatus is received, thereby determining whether a missed call occurs. In a case that the call connection is terminated, if the second call processing apparatus does not receive the second ringing message, the second call processing apparatus may alternatively send the second missed-call reminder information to the first call processing apparatus, to remind the user of the first call processing apparatus of occurrence of the missed call.

In step 601 and step 602, the steps of receiving, by the first call processing apparatus, a first call request sent by the second call processing apparatus and establishing a call connection with the second call processing apparatus according to the first call request are the same as step 101 and step 102. To avoid repetition, details are not described herein again.

Since the failure of the establishment of the call connection may be caused by an abnormal communication link between the first call processing apparatus and the network-side device or an abnormal communication link between the second call processing apparatus and the network-side device, if the second call processing apparatus sends the second missed-call reminder information through the network-side device, delivery of the second missed-call reminder information may be delayed. Therefore, the second missed-call reminder information in this embodiment of this application may be sent to the first call processing apparatus by the second call processing apparatus through the target processing apparatus. The target processing apparatus may include at least one of the following: a first processing apparatus capable of establishing a D2D connection with the first call processing apparatus, and a second processing apparatus capable of establishing a D2D connection with the second call processing apparatus.

For example, in a case that the communication link between the second call processing apparatus and the network-side device is abnormal, the second call processing apparatus may send, based on a D2D communication technology, the second missed-call reminder information to the first call processing apparatus through the second processing apparatus capable of establishing a D2D connection with the second call processing apparatus.

In a case that the communication link between the first call processing apparatus and the network-side device is abnormal, the second call processing apparatus may first send the second missed-call reminder information to the network-side device, and the network-side device instructs the first processing apparatus capable of establishing a D2D connection with the first call processing apparatus to send the second missed-call reminder information to the first call processing apparatus.

In a case that the communication links between the first call processing apparatus and the network-side device and between the second call processing apparatus and the network-side device are both abnormal, the second call processing apparatus may first send, based on the D2D communication technology, the second missed-call reminder information to the first processing apparatus capable of establishing a D2D connection with the first call processing apparatus through the second processing apparatus capable of establishing a D2D connection with the second call processing apparatus, and then the first processing apparatus sends the above second missed-call reminder information to the first call processing apparatus based on the D2D communication technology.

Correspondingly, in step 603, the first call processing apparatus may receive the second missed-call reminder information sent by the second call processing apparatus through the target processing apparatus in a case that the call connection is terminated.

The second missed-call reminder information may include a calling-party number of the second call processing apparatus and a call ID used for identifying a call, so as to facilitate the user to learn information such as the calling-party number of the second call processing apparatus and a call time.

The first call processing apparatus, after receiving the second missed-call reminder information, may output the missed-call reminder information according to the second missed-call reminder information. The missed-call reminder information may be outputted by, but not limited to, displaying a text message including the second missed-call reminder information and displaying a reminder sign including the second missed-call reminder information. Certainly, the output manner may alternatively be manners such as voice output, which are not listed one by one herein.

In this embodiment of this application, the first call processing apparatus may receive the second missed-call reminder information sent by the second call processing apparatus through the target processing apparatus in a case that the call connection is terminated, and may output the missed-call reminder information according to the second missed-call reminder information. The target processing apparatus includes at least one of the following: a first processing apparatus capable of establishing a D2D connection with the first call processing apparatus, and a second processing apparatus capable of establishing a D2D connection with the second call processing apparatus. Therefore, the first call processing apparatus may obtain the second missed-call reminder information through D2D communication and output the missed-call reminder information based on the second missed-call reminder information, which prevents the problem that the first call processing apparatus cannot receive the missed-call reminder information in time caused by an abnormal communication link between the second call processing apparatus and the network-side device or between the first call processing apparatus and the network-side device, so that the user of the first call processing apparatus can learn a missed call in time, thereby improving real-time performance of the missed-call reminder.

Optionally, the method may further include:
detecting, by the first call processing apparatus, a first ringing message corresponding to the first call request in a case that the call connection is terminated;
obtaining, by the first call processing apparatus, first call information of the second call processing apparatus according to the first call request in a case that the first ringing message is not detected, where the first call information includes a calling-party number; and
querying, by the first call processing apparatus, a preset database for calling-party information corresponding to the calling-party number, where the calling-party information includes at least one of the following: calling-party name information, calling-party home location information, and calling-party social account information; and
the outputting missed-call reminder information according to the second missed-call reminder information includes:
   generating, by the first call processing apparatus, third missed-call reminder information based on the second missed-call reminder information, the calling-party information, and the first call information; and
   displaying, by the first call processing apparatus, the third missed-call reminder information.

In this embodiment of this application, the first call processing apparatus may detect the first ringing message corresponding to the first call request while receiving the second missed-call reminder information sent by the second call processing apparatus, obtain the first call information according to the first call request in a case that the first ringing message is not detected, and query the calling-party information according to the calling-party number. A specific implementation is similar to the embodiments corresponding to step 103 and step 104. Details are not described herein again.

It is to be noted that, to prevent repeated reminders, after the first call processing apparatus receives the second missed-call reminder information, the third missed-call reminder information may be generated based on the second missed-call reminder information, the first call information, and the calling-party information and displayed.

The step of generating the third missed-call reminder information based on the second missed-call reminder information, the first call information, and the calling-party information may include, but not limited to, checking whether the information included in the second missed-call reminder information is consistent with the first call information and the calling-party information. That is, if the second missed-call reminder information and the first call information both include the calling-party number of the second call processing apparatus and the call ID used for identifying a call, the third missed-call reminder information is generated in a case that the calling-party number and the call ID included in the second missed-call reminder information and the first call information are consistent.

Further, if the second missed-call reminder information includes the first call information and the calling-party information, the first call processing apparatus may determine the second missed-call reminder information as the third missed-call reminder information.

If the first call information and the calling-party information include information not included in the second missed-call reminder information, for example, the second missed-call reminder information includes only the calling-party number and the call ID, but the calling-party information further includes calling-party social account information or calling-party home location information, the first call processing apparatus may aggregate the second missed-call reminder information, the first call information, and the calling-party information into the third missed-call reminder information, and display the third missed-call reminder information.

Correspondingly, the third missed-call reminder information may also include information such as the calling-party number, the calling-party name information, the calling-party home location information, and the calling-party social account information. That is, while receiving the second missed-call reminder information, the first call processing apparatus may locally obtain the first call information and the calling-party information, and generate and display the third missed-call reminder information based on the first call information, the calling-party information, and the second missed-call reminder information. Since the third missed-call reminder information may be formed by aggregation based on the first call information, the calling-party information, and the second missed-call reminder information, information integrity of the missed-call reminder information can be improved, so that the user of the first call processing apparatus obtains more detailed call information and user information of the second call processing apparatus, and repeated reminders are prevented, thereby improving use experience of the user of the first call processing apparatus.

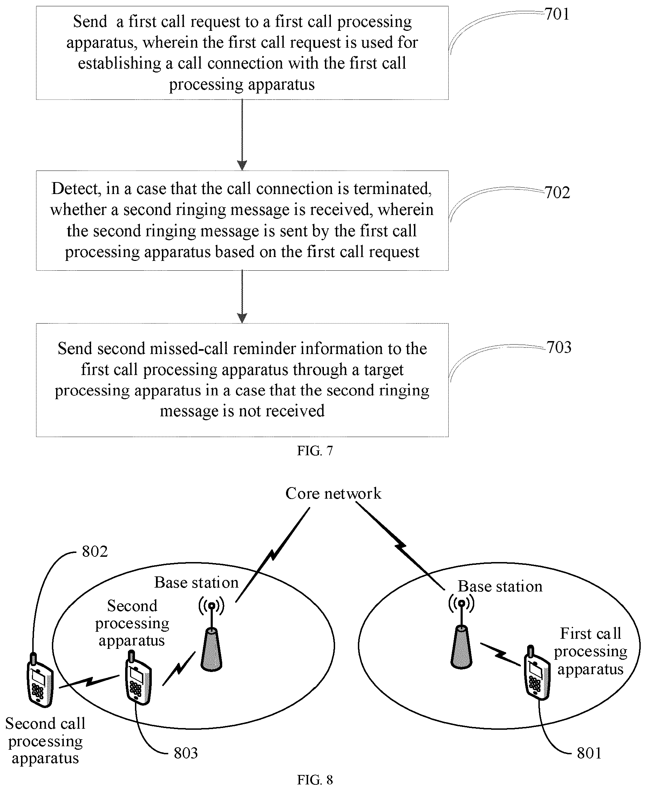

Corresponding to step 601 to step 604, referring to FIG. 7, an embodiment of this application further provides a call processing method. The method is performed by the second call processing apparatus. The method includes the following steps:
Step 701: The second call processing apparatus sends a first call request to a first call processing apparatus, where the first call request is used for establishing a call connection with the second call processing apparatus.
Step 702: The second call processing apparatus detects, in a case that the call connection is terminated, whether a second ringing message is received, where the second ringing message is sent by the first call processing apparatus based on the first call request.
Step 703: The second call processing apparatus sends second missed-call reminder information to the first call processing apparatus through a target processing apparatus in a case that the second ringing message is not received.

The target processing apparatus includes at least one of the following: a first processing apparatus capable of establishing a D2D connection with the first call processing apparatus, and a second processing apparatus capable of establishing a D2D connection with the second call processing apparatus.

In step 701, the first call request may be generated through dialing input performed by a user of the second call processing apparatus to the second call processing apparatus, sent by the second call processing apparatus to a network side, and sent by the network side to the first call processing apparatus. The first call request may be sent to a network-side device in a form of signaling, and then sent by the network-side device to the above first call processing apparatus.

For the process of establishing a call between the second call processing apparatus and the first call processing apparatus, reference may be made to the description in the foregoing method embodiment. Details are not described herein again.

As can be seen from the above content, the first call processing apparatus may determine, in a case that the call connection is terminated, whether the first call processing apparatus performs a ringing reminder by detecting whether the first ringing message is generated.

Similarly, in step 702, the second call processing apparatus may also determine, in a case that the call connection is terminated, whether the first call processing apparatus performs a ringing reminder by detecting whether the second ringing message is received, thereby determining whether a user of the first call processing apparatus can learn the call request of the second call processing apparatus according to the ringing reminder.

It may be understood that the first call processing apparatus, after generating the first ringing message, may send the first ringing message to the network-side device, and the network-side device, after receiving the first ringing message, sends the second ringing message to the second call processing apparatus, to notify the second call processing apparatus that the first call processing apparatus has performed a ringing reminder.

During the establishment of the call connection, if the first call processing apparatus cannot generate the first ringing message due to the abnormal communication link between the second call processing apparatus and the network-side device or between the first call processing apparatus and the network-side device, the second call processing apparatus cannot receive the second ringing message, either.

In step 703, in a case that the second call processing apparatus does not receive the second ringing message, it may be determined that the first call processing apparatus does not perform any ringing reminder. Therefore, the second call processing apparatus may also send the second missed-call reminder information to the first call processing apparatus, to remind the user of the first call processing apparatus that a missed call occurs.

Correspondingly, if the second call processing apparatus receives the second ringing message, it indicates that the first call processing apparatus has performed a ringing reminder, and the user of the first call processing apparatus can learn the call request of the second call processing apparatus according to the ringing reminder. The second call processing apparatus does not need to send the second missed-call reminder information again.

As can be seen the above content, since the termination of the call connection may be caused by an abnormal communication link between the first call processing apparatus and the network-side device or an abnormal communication link between the second call processing apparatus and the network-side device, if the second call processing apparatus sends the second missed-call reminder information through the network-side device, delivery of second missed-call reminder information may be delayed.

To prevent delay of the delivery of the second missed-call reminder information caused by the abnormal communication link between the second call processing apparatus and the network-side device or between the first call processing apparatus and the network-side device, in this embodiment of this application, the second call processing apparatus may send, based on the D2D communication technology, the second missed-call reminder information to the first call processing apparatus through the target processing apparatus. The target processing apparatus may include at least one of the following: a first processing apparatus capable of establishing a D2D connection with the first call processing apparatus, and a second processing apparatus capable of establishing a D2D connection with the second call processing apparatus.

For example, in a case that the communication link between the second call processing apparatus and the network-side device is abnormal, the second call processing apparatus may send, based on a D2D communication technology, the second missed-call reminder information to the first call processing apparatus through the second processing apparatus capable of establishing a D2D connection with the second call processing apparatus.

In a case that the communication link between the first call processing apparatus and the network-side device is abnormal, the second call processing apparatus may first send the second missed-call reminder information to the network-side device, and the network-side device instructs the first processing apparatus capable of establishing a D2D connection with the first call processing apparatus to send the second missed-call reminder information to the first call processing apparatus.

In a case that the communication links between the first call processing apparatus and the network-side device and between the second call processing apparatus and the network-side device are both abnormal, the second call processing apparatus may first send, based on the D2D communication technology, the second missed-call reminder information to the first processing apparatus capable of establishing a D2D connection with the first call processing apparatus through the second processing apparatus capable of establishing a D2D connection with the second call processing apparatus, and then the first processing apparatus sends the second missed-call reminder information to the first call processing apparatus based on the D2D communication technology.

Certainly, it is to be understood that, in the above three cases, the manner in which the second call processing apparatus sends the second missed-call reminder information through the target processing apparatus does not constitute a limitation on this embodiment of this application. The manner in which the second call processing apparatus sends the second missed-call reminder information through the target processing apparatus may be specifically set according to an actual application scenario.

In this embodiment of this application, the second call processing apparatus may send the first call request to the first call processing apparatus, determine whether the user senses the call by detecting whether the second ringing message is received when the call connection is terminated, and when the second ringing message is not received, send the second missed-call reminder information to the first call processing apparatus based on the D2D communication technology through at least one of the first processing apparatus capable of establishing a D2D connection with the first call processing apparatus and the second processing apparatus capable of establishing a D2D connection with the second call processing apparatus, thereby preventing the problem of the delay of the delivery of the second missed-call reminder information caused by the abnormal communication link between the second call processing apparatus and the network-side device or between the first call processing apparatus and the network-side device, so that the user of the first call processing apparatus can learn the missed call in time, thereby improving real-time performance of the missed-call reminder.

Optionally, step 703 may specifically include:
sending a first broadcast message according to a D2D communication mode in a case that the second ringing message is not received and a communication connection between the second call processing apparatus and a base station fails, where the first broadcast message carries the second missed-call reminder information and called-party information corresponding to the first call processing apparatus, and the first broadcast message is used for instructing the second processing apparatus to send the second missed-call reminder information to the first call processing apparatus through the base station according to the called-party information.

In this embodiment of this application, the D2D communication mode may be centralized D2D communication. That is, the second missed-call reminder information is sent through cooperation between D2D communication and the network-side device (such as a base station) of a core network.

Referring to FIG. 8, FIG. 8 is a diagram of a possible communication link according to an embodiment of this application. As shown in FIG. 8, if the communication connection between the second call processing apparatus 802 and the base station fails, the second call processing apparatus 802 may send the first broadcast message to a neighboring cell. The first broadcast message may carry the second missed-call reminder information and the called-party information corresponding to the first call processing apparatus 801. In this case, if there is a second processing apparatus 803 with a D2D communication function enabled and connected to a base station in the neighboring cell, the second processing apparatus 803 may receive the first broadcast message, and may send the second missed-call reminder information to the first call processing apparatus 801 through the base station according to the called-party information carried in the first broadcast message.

The called-party information may include a device number of the first call processing apparatus, the base station may find the last registered address of the first call processing apparatus through the device number of the first call processing apparatus, and send the second missed-call reminder information to the first call processing apparatus through a base station in a cell where the registered address is located.

The second missed-call reminder information may include information such as the device number of the second call processing apparatus, the call ID used for identifying a call, and the incoming-call time, so that the first call processing apparatus outputs missed-call reminder information based on the second missed-call reminder information after receiving the second missed-call reminder information.

In this embodiment of this application, in a case that the ringing message is not received and the communication connection between the second call processing apparatus and the base station fails, the second call processing apparatus may send the first broadcast message according to the D2D communication mode, so as to establish the D2D connection with the second processing apparatus, and instruct the second processing apparatus to send the second missed-call reminder information to the first call processing apparatus through the base station according to the called-party information carried in the first broadcast message. In this way, through the D2D communication mode in cooperation with the base station, the second missed-call reminder information is sent to the first call processing apparatus, which can prevent the problem of the delay of the delivery of the second missed-call reminder information caused by the abnormal communication link between the second call processing apparatus and the network-side device, thereby improving real-time performance of the missed-call reminder.

Optionally, step 703 may specifically include:
sending an indication message to the first processing apparatus through a base station in a case that the second ringing message is not received and a communication connection between the second call processing apparatus and the base station succeeds, where the indication message is used for instructing the first processing apparatus to send a second broadcast message according to a D2D communication mode.

The second broadcast message carries the second missed-call reminder information and called-party information corresponding to the first call processing apparatus, and the first processing apparatus is a communication apparatus capable of establishing a D2D connection with the first call processing apparatus in a cell with which the first call processing apparatus currently registers.

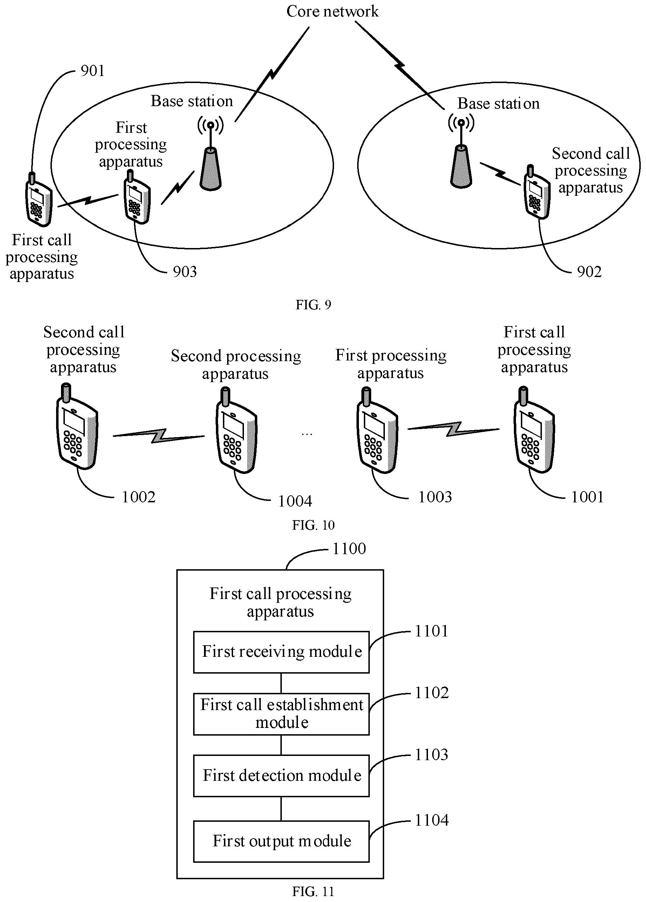

Referring to FIG. 9, FIG. 9 is a diagram of a possible communication link according to an embodiment of this application. As shown in FIG. 9, if the communication connection between the second call processing apparatus 902 and the base station succeeds, the second call processing apparatus 902 may first send the second missed-call reminder information and the called-party information to the base station, and the base station may find, according to the called-party information, an address of a cell with which the called party finally registers, so as to send the second missed-call reminder information and the called-party information to a base station in a cell where the first call processing apparatus 901 is located.

In this case, if a communication link between the first call processing apparatus 901 and the base station is abnormal, the base station in the cell in which the first call processing apparatus 901 is located may send an indication message to the first processing apparatus 903 based on the second missed-call reminder information and the called-party information, so as to instruct the first processing apparatus 903 to send, based on the D2D communication mode, where the second broadcast message carries the second missed-call reminder information, until the first call processing apparatus 901 receives the second broadcast message.

It is to be understood that one or more first processing apparatuses may be provided, and the base station may send the indication message in groups to communication apparatuses with enabled D2D communication functions in the cell, so that the first processing apparatus capable of establishing a D2D connection with the first call processing apparatus sends the second broadcast message carrying the second missed-call reminder information, until the second broadcast message is received by the first call processing apparatus.

In this embodiment of this application, in a case that the second call processing apparatus does not detect any ringing message and a communication connection between the second call processing apparatus and the base station succeeds, the base station sends, in the cell with which the first call processing apparatus registers, the indication message to the first processing apparatus capable of establishing a D2D connection with the first call processing apparatus, to instruct the first processing apparatus to send the second broadcast message carrying the second missed-call reminder information, until the first call processing apparatus receives the second broadcast message.

In this way, through the centralized D2D communication mode in cooperation with the base station, the second missed-call reminder information is sent to the first call processing apparatus through the first processing apparatus, which can prevent the problem of the delay of the delivery of the second missed-call reminder information caused by the abnormal communication link between the first call processing apparatus and the network-side device, thereby improving real-time performance of the missed-call reminder.

Optionally, step 703 may specifically include:
sending a third broadcast message according to a D2D communication mode in a case that the second ringing message is not received, where the third broadcast message carries the second missed-call reminder information and called-party information corresponding to the first call processing apparatus, and the third broadcast message is used for instructing the second processing apparatus to send the second missed-call reminder information to the first call processing apparatus through the first processing apparatus according to the called-party information.

In this embodiment of this application, the D2D communication mode may be distributed D2D communication. That is, the second missed-call reminder information can be sent to the first call processing apparatus only through communication between devices.

Referring to FIG. 10, FIG. 10 is a diagram of a possible communication link according to an embodiment of this application. As shown in FIG. 10, the second call processing apparatus 1002 may send third broadcast message to a second processing apparatus 1004 capable of establishing a D2D connection with the second call processing apparatus 1002, so as to instruct the second processing apparatus 1004 to send the second missed-call reminder information to the first call processing apparatus 1001 through the first processing apparatus 1003.

In an optional implementation, communication apparatuses with D2D functions enabled may form a distributed network, and each communication apparatus may be regarded as a node in the network. The first call processing apparatus may send third broadcast message to surrounding nodes (that is, at least one second processing apparatus), and the second processing apparatus, after receiving the third broadcast message, continues to send the third broadcast message to the surrounding nodes, and finally, a first processing apparatus capable of establishing a D2D connection with the first call processing apparatus sends the third broadcast message to the surrounding nodes, until the third broadcast message is received by the first call processing apparatus. That is, at least one communication apparatus that transmits broadcast messages may also exist between the second processing apparatus and the first processing apparatus, so as to send the second missed-call reminder information to the first call processing apparatus through D2D communication of a plurality of communication apparatuses.

It may be understood that, since the third broadcast message carries called-party information corresponding to the first call processing apparatus, after receiving the third broadcast message, each communication apparatus may perform routing and addressing according to the called-party information and determine a network address of the first call processing apparatus, and each node in the distributed network performs routing and forwarding multiple times according to the network address of the first call processing apparatus, until the first call processing apparatus receives the second missed-call reminder information.

In this embodiment of this application, the second call processing apparatus may send the third broadcast message to the second processing apparatus capable of establishing a D2D connection with the second call processing apparatus, so as to instruct the second processing apparatus to send the second missed-call reminder information to the first call processing apparatus through the first processing apparatus capable of establishing a D2D connection with the first call processing apparatus, so that the second missed-call reminder information can be sent to the first call processing apparatus through the D2D communication of the plurality of communication apparatuses, which prevents the problem of the delay of the delivery of the second missed-call reminder information caused by the abnormal communication link between the first call processing apparatus or the second call processing apparatus and the network-side device, thereby improving real-time performance of the missed-call reminder.

It is to be noted that, the call processing method provided in this embodiment of this application may be performed by a call processing apparatus or a control module in the call processing apparatus and configured to perform a call processing method. In this embodiment of this application, the call processing apparatus provided in this embodiment of this application is described based on an example in which the call processing apparatus performs the call processing method.

Referring to FIG. 11, an embodiment of this application provides a first call processing apparatus 1100. The apparatus includes:
a first receiving module 1101 configured to receive a first call request sent by a second call processing apparatus;
a first call establishment module 1102 configured to establish a call connection with the second call processing apparatus according to the first call request;
a first detection module 1103 configured to detect a first ringing message corresponding to the first call request in a case that the call connection is terminated; and
a first output module 1104 configured to output missed-call reminder information in a case that the first ringing message is not detected.

In this embodiment of this application, the first call processing apparatus may receive, through the first receiving module 1101, the first call request sent by the second call processing apparatus, establish, through the first call establishment module 1102, the call connection with the second call processing apparatus when the first call request sent by the second call processing apparatus is received, detect, through the first detection module 1103 in a case that the call connection is terminated, whether the first ringing message corresponding to the first call request exists, and output, through the first output module 1104, the missed-call reminder information according to the first call request if the first ringing message is not detected. In this way, whether the first ringing message exists is locally detected by the first call processing apparatus, and the missed-call reminder information is outputted in a case that the first ringing message is not detected, which can prevent the problem that the first call processing apparatus cannot receive the missed-call reminder information in time due to the abnormal communication link between the second call processing apparatus and the network-side device or between the first call processing apparatus and the network-side device when the second call processing apparatus sends the missed-call reminder information to the first call processing apparatus, so that the user of the first call processing apparatus can learn a missed call in time, thereby improving real-time performance of the missed-call reminder.

Optionally, the first output module 1104 includes:
an obtaining unit configured to obtain first call information of the second call processing apparatus according to the first call request in a case that the first ringing message is not detected, where the first call information includes a calling-party number;
a query unit configured to query a preset database for calling-party information corresponding to the calling-party number, where the calling-party information includes at least one of the following: calling-party name information, calling-party home location information, and calling-party social account information; and
a first display unit configured to display first missed-call reminder information according to the first call information and the calling-party information.

Optionally, the first display unit is specifically configured to:
display the first missed-call reminder information on a target interface, where the first missed-call reminder information includes the first call information and the calling-party information, and the target interface further includes a first control and a second control;
send, in a case that a first input of a user for the first control is received, a second call request to the second call processing apparatus according to the calling-party number in response to the first input; and
query and display, in a case that a second input of the user for the second control is received, social account information associated with the calling-party number in response to the second input.

The call processing apparatus in this embodiment of this application may be an apparatus, or may be a component, an integrated circuit, or a chip in a terminal. The apparatus may be a mobile electronic device or a non-mobile electronic device. For example, the mobile electronic device may be a mobile phone, a tablet computer, a notebook computer, a palm computer, an in-vehicle terminal, a wearable device, an ultra-mobile personal computer (ultra-mobile personal computer, UMPC), a netbook, a personal digital assistant (personal digital assistant, PDA), or the like, and the non-mobile electronic device may be a server, a network attached storage (Network Attached Storage, NAS), a personal computer (personal computer, PC), a television (television, TV), a teller machine, an automated machine, or the like, which are not specifically limited in this embodiment of this application.

The call processing apparatus in this embodiment of this application may be an apparatus with an operating system. The operating system may be an Android (Android) operating system, an ios operating system, or another possible operating system, which is not specifically limited in this embodiment of this application.

The call processing apparatus provided in this embodiment of this application can implement all processes implemented in the method embodiments shown in FIG. 1 to FIG. 5. To avoid repetition, details are not described herein again.

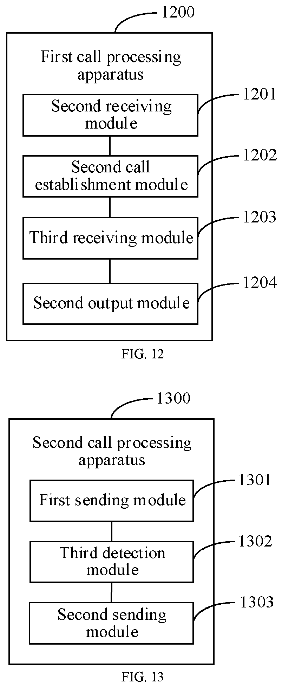

Referring to FIG. 12, an embodiment of this application further provides a first call processing apparatus 1200. The apparatus includes:
a second receiving module 1201 configured to receive a first call request sent by a second call processing apparatus;
a second call establishment module 1202 configured to establish a call connection with the second call processing apparatus according to the first call request;
a third receiving module 1203 configured to receive second missed-call reminder information sent by the second call processing apparatus through a target processing apparatus in a case that the call connection is terminated; and
a second output module 1204 configured to output missed-call reminder information according to the second missed-call reminder information.

The target processing apparatus includes at least one of the following: a first processing apparatus capable of establishing a device-to-device D2D connection with the first call processing apparatus, and a second processing apparatus capable of establishing a D2D connection with the second call processing apparatus.

In this embodiment of this application, the first call processing apparatus 1200 may receive, through the second receiving module 1201, the first call request sent by the second call processing apparatus, establish, through the second call establishment module 1202, the call connection with the second call processing apparatus according to the first call request, receive, through the third receiving module 1203, the second missed-call reminder information sent by the second call processing apparatus through the target processing apparatus in a case that the call connection is terminated, and output the missed-call reminder information according to the second missed-call reminder information through the second output module 1204. The target processing apparatus includes at least one of the following: a first processing apparatus capable of establishing a D2D connection with the first call processing apparatus, and a second processing apparatus capable of establishing a D2D connection with the second call processing apparatus. Therefore, the first call processing apparatus may obtain the second missed-call reminder information through D2D communication and output the missed-call reminder information based on the second missed-call reminder information, which prevents the problem that the first call processing apparatus cannot receive the missed-call reminder information in time caused by the abnormal communication link between the second call processing apparatus and the network-side device or between the first call processing apparatus and the network-side device, so that the user of the first call processing apparatus can learn a missed call in time, thereby improving real-time performance of the missed-call reminder.

Optionally, the first call processing apparatus 1200 further includes:
a second detection module configured to detect a first ringing message corresponding to the first call request in a case that the call connection is terminated;
an obtaining module configured to obtain first call information of the second call processing apparatus according to the first call request in a case that the first ringing message is not detected, where the first call information includes a calling-party number; and
a query module configured to query a preset database for calling-party information corresponding to the calling-party number, where the calling-party information includes at least one of the following: calling-party name information, calling-party home location information, and calling-party social account information.

The second output module includes:
a generation unit configured to generate third missed-call reminder information based on the second missed-call reminder information, the calling-party information, and the first call information; and
a second display unit configured to display the third missed-call reminder information.

The call processing apparatus in this embodiment of this application may be an apparatus, or may be a component, an integrated circuit, or a chip in a terminal. The apparatus may be a mobile electronic device or a non-mobile electronic device. For example, the mobile electronic device may be a mobile phone, a tablet computer, a notebook computer, a palm computer, an in-vehicle terminal, a wearable device, an ultra-mobile personal computer (ultra-mobile personal computer, UMPC), a netbook, a personal digital assistant (personal digital assistant, PDA), or the like, and the non-mobile electronic device may be a server, a network attached storage (Network Attached Storage, NAS), a personal computer (personal computer, PC), a television (television, TV), a teller machine, an automated machine, or the like, which are not specifically limited in this embodiment of this application.

The call processing apparatus in this embodiment of this application may be an apparatus with an operating system. The operating system may be an Android (Android) operating system, an ios operating system, or another possible operating system, which is not specifically limited in this embodiment of this application.

The call processing apparatus provided in this embodiment of this application can implement all processes implemented in the method embodiment shown in FIG. 6. To avoid repetition, details are not described herein again.

Referring to FIG. 13, an embodiment of this application further provides a second call processing apparatus 1300. The apparatus includes:
a first sending module 1301 configured to send a first call request to a first call processing apparatus, where the first call request is used for establishing a call connection with the second call processing apparatus;
a third detection module 1302 configured to detect, in a case that the call connection is terminated, whether a second ringing message is received, where the second ringing message is sent by the first call processing apparatus based on the first call request; and
a second sending module 1303 configured to send second missed-call reminder information to the first call processing apparatus through a target processing apparatus in a case that the second ringing message is not received.

The target processing apparatus includes at least one of the following: a first processing apparatus capable of establishing a D2D connection with the first call processing apparatus, and a second processing apparatus capable of establishing a D2D connection with the second call processing apparatus.

In this embodiment of this application, the second call processing apparatus may send, through the first sending module 1301, the first call request to the first call processing apparatus, determine whether the first call processing apparatus performs a ringing reminder by detecting, through the third detection module 1302, whether the second ringing message is received when the call connection is terminated, and in a case that the second ringing message is not received, send, through the second sending module 1303, the second missed-call reminder information to the first call processing apparatus based on the D2D communication technology through a target call processing apparatus. Since the target call processing apparatus includes at least one of the following: the first processing apparatus capable of establishing a D2D connection with the first call processing apparatus and the second processing apparatus capable of establishing a D2D connection with the second call processing apparatus, through the D2D communication mode, the problem of the delay of the delivery of the second missed-call reminder information caused by the abnormal communication link between the second call processing apparatus and the network-side device or between the first call processing apparatus and the network-side device is prevented, so that the user of the first call processing apparatus can learn a missed call in time, thereby improving real-time performance of the missed-call reminder.

Optionally, the second sending module 1303 includes:
a first sending unit configured to send a first broadcast message according to a D2D communication mode in a case that the ringing message is not received and a communication connection between the second call processing apparatus and a base station fails, where the first broadcast message carries the second missed-call reminder information and called-party information corresponding to the first call processing apparatus, and the first broadcast message is used for instructing the second processing apparatus to send the second missed-call reminder information to the first call processing apparatus through the base station according to the called-party information.

Optionally, the second sending module 1303 includes:
a second sending unit configured to send an indication message to the first processing apparatus through a base station in a case that the ringing message is not received and a communication connection between the second call processing apparatus and the base station succeeds, where the indication message is used for instructing the first processing apparatus to send a second broadcast message according to a D2D communication mode.

The second broadcast message carries the second missed-call reminder information and called-party information corresponding to the first call processing apparatus, and the first processing apparatus is a communication apparatus capable of establishing a D2D connection with the first call processing apparatus in a cell with which the first call processing apparatus currently registers.

Optionally, the second sending module 1303 includes:
a third sending unit configured to send a third broadcast message according to a D2D communication mode in a case that the ringing message is not received and a communication connection between the second call processing apparatus and a base station fails, where the third broadcast message carries the second missed-call reminder information and called-party information corresponding to the first call processing apparatus, and the third broadcast message is used for instructing the second processing apparatus to send the second missed-call reminder information to the first call processing apparatus through the first processing apparatus according to the called-party information.

The call processing apparatus in this embodiment of this application may be an apparatus, or may be a component, an integrated circuit, or a chip in a terminal. The apparatus may be a mobile electronic device or a non-mobile electronic device. For example, the mobile electronic device may be a mobile phone, a tablet computer, a notebook computer, a palm computer, an in-vehicle terminal, a wearable device, an ultra-mobile personal computer (ultra-mobile personal computer, UMPC), a netbook, a personal digital assistant (personal digital assistant, PDA), or the like, and the non-mobile electronic device may be a server, a network attached storage (Network Attached Storage, NAS), a personal computer (personal computer, PC), a television (television, TV), a teller machine, an automated machine, or the like, which are not specifically limited in this embodiment of this application.

The call processing apparatus in this embodiment of this application may be an apparatus with an operating system. The operating system may be an Android (Android) operating system, an ios operating system, or another possible operating system, which is not specifically limited in this embodiment of this application.

The call processing apparatus provided in this embodiment of this application can implement all processes implemented in the method embodiments shown in FIG. 7 to FIG. 10. To avoid repetition, details are not described herein again.

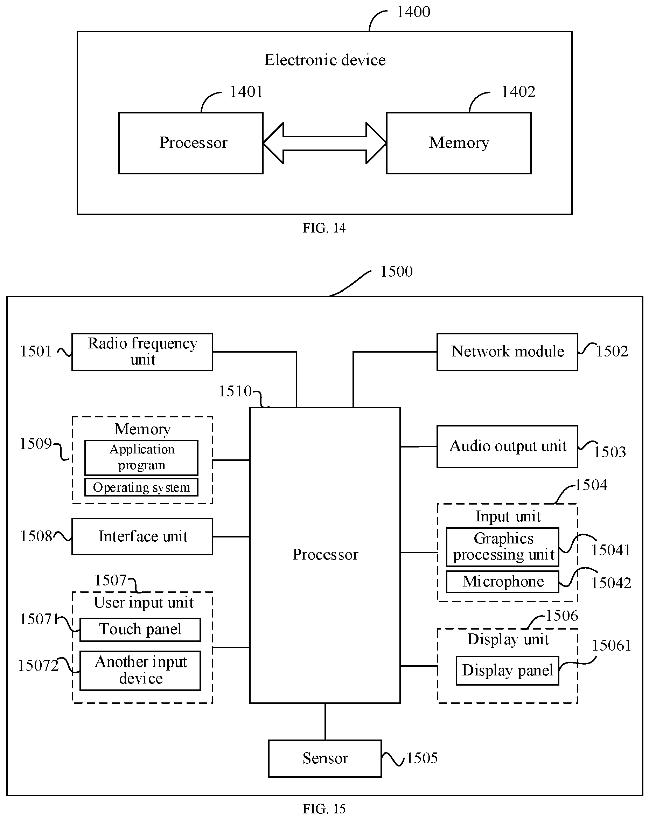

Optionally, as shown in FIG. 14, an embodiment of this application further provides an electronic device 1400, including a processor 1401, a memory 1402, and a program or an instruction stored in the memory 1402 and executable on the processor 1401. When the program or the instruction is executed by the processor 1401, all processes in the embodiments of the call processing method are implemented, and the same technical effects can be achieved. To avoid repetition, details are not described herein again.

It is to be noted that, the electronic device in this embodiment of this application may be the mobile electronic device or non-mobile electronic device described above.

FIG. 15 is a schematic diagram of a hardware structure of an electronic device for implementing the embodiments of this application.

The electronic device 1500 includes, but is not limited to, components such as a radio frequency unit 1501, a network module 1502, an audio output unit 1503, an input unit 1504, a sensor 1505, a display unit 1506, a user input unit 1507, an interface unit 1508, a memory 1509, and a processor 1510.

A person skilled in the art may understand that the electronic device 1500 may further include a power supply (such as a battery) for supplying power to the components. The power supply may be logically connected to the processor 1510 through a power management system, thereby implementing functions such as charging, discharging, and power consumption management through the power management system. The structure of the electronic device shown in FIG. 15 constitutes no limitation on the electronic device, and the electronic device may include more or fewer components than those shown in the figure, or some components may be combined, or a different component deployment may be used. Details are not described herein again.

When the electronic device is the first call processing apparatus, the radio frequency unit 1501 is configured to receive a first call request sent by a second call processing apparatus.

The processor 1510 is configured to establish a call connection with the second call processing apparatus according to the first call request; and detect a first ringing message corresponding to the first call request in a case that the call connection is terminated.

The display unit 1506 or the audio output unit 1503 is configured to output missed-call reminder information in a case that the first ringing message is not detected.

In this embodiment of this application, the first call processing apparatus may establish the call connection with the second call processing apparatus when receiving the first call request sent by the second call processing apparatus, detect, in a case that the call connection is terminated, whether the first ringing message corresponding to the first call request exists, and output the missed-call reminder information in a case that the first ringing message is not detected. In this way, whether the first ringing message exists is locally detected by the first call processing apparatus, and the missed-call reminder information is displayed in a case that the first ringing message is not detected, which can prevent the problem that the first call processing apparatus cannot receive the missed-call reminder information in time due to the abnormal communication link between the second call processing apparatus and the network-side device or between the first call processing apparatus and the network-side device when the second call processing apparatus sends the missed-call reminder information to the first call processing apparatus, so that the user of the first call processing apparatus can learn a missed call in time, thereby improving real-time performance of the missed-call reminder.

Optionally, the processor 1510 is further configured to obtain first call information of the second call processing apparatus according to the first call request in a case that the first ringing message is not detected, where the first call information includes a calling-party number; and query a preset database for calling-party information corresponding to the calling-party number, where the calling-party information includes at least one of the following: calling-party name information, calling-party home location information, and calling-party social account information.

The display unit 1506 is further configured to display first missed-call reminder information according to the first call information and the calling-party information.

Optionally, the display unit 1506 is further configured to display the first missed-call reminder information on a target interface, where the first missed-call reminder information includes the first call information and the calling-party information, and the target interface further includes a first control and a second control.

The processor 1510 is further configured to send, in a case that a first input of a user for the first control is received, a second call request to the second call processing apparatus according to the calling-party number in response to the first input; and query and display, in a case that a second input of the user for the second control is received, social account information associated with the calling-party number in response to the second input.

Optionally, the display unit 1506 is further configured to perform at least one of the following:
displaying an incoming-call record including the first call information and the calling-party information on an incoming-call notification interface; and
displaying a reminder sign at a target position on a current display interface.

Alternatively, when the electronic device is the first call processing apparatus, the radio frequency unit 1501 is configured to receive a first call request sent by a second call processing apparatus, or configured to receive second missed-call reminder information sent by the second call processing apparatus through a target processing apparatus in a case that the call connection is terminated.

The processor 1510 is configured to establish a call connection with the second call processing apparatus according to the first call request.

The display unit 1506 or the audio output unit 1503 is configured to output missed-call reminder information according to the second missed-call reminder information.

The target processing apparatus includes at least one of the following: a first processing apparatus capable of establishing a device-to-device D2D connection with the first call processing apparatus, and a second processing apparatus capable of establishing a D2D connection with the second call processing apparatus.

In this embodiment of this application, the first call processing apparatus may receive the first call request sent by the second call processing apparatus, establish the call connection with the second call processing apparatus according to the first call request, receive the second missed-call reminder information sent by the second call processing apparatus through the target processing apparatus in a case that the call connection is terminated, and output the missed-call reminder information according to the second missed-call reminder information. The target processing apparatus includes at least one of the following: a first processing apparatus capable of establishing a D2D connection with the first call processing apparatus, and a second processing apparatus capable of establishing a D2D connection with the second call processing apparatus. Therefore, the first call processing apparatus may obtain the second missed-call reminder information through D2D communication and output the missed-call reminder information based on the second missed-call reminder information, which prevents the problem that the first call processing apparatus cannot receive the missed-call reminder information in time caused by an abnormal communication link between the second call processing apparatus and the network-side device or between the first call processing apparatus and the network-side device, so that the user of the first call processing apparatus can learn a missed call in time, thereby improving real-time performance of the missed-call reminder.

When the electronic device is the second call processing apparatus, the radio frequency unit 1501 is configured to send a first call request to a first call processing apparatus, where the first call request is used for establishing a call connection with the second call processing apparatus.

The processor 1510 is configured to detect, in a case that the call connection is terminated, whether a second ringing message is received, where the second ringing message is sent by the first call processing apparatus based on the first call request.

The radio frequency unit 1501 is further configured to send second missed-call reminder information to the first call processing apparatus through a target processing apparatus in a case that the second ringing message is not received.

The target processing apparatus includes at least one of the following: a first processing apparatus capable of establishing a D2D connection with the first call processing apparatus, and a second processing apparatus capable of establishing a D2D connection with the second call processing apparatus.

Optionally, the processor 1510 is configured to detect a first ringing message corresponding to the first call request in a case that the call connection is terminated; obtain first call information of the second call processing apparatus according to the first call request in a case that the first ringing message is not detected, where the first call information includes a calling-party number; query a preset database for calling-party information corresponding to the calling-party number, where the calling-party information includes at least one of the following: calling-party name information, calling-party home location information, and calling-party social account information; and generate third missed-call reminder information based on the second missed-call reminder information, the calling-party information, and the first call information.

The display unit 1506 is configured to display the third missed-call reminder information.

Optionally, the radio frequency unit 1501 is further configured to send a first broadcast message according to a D2D communication mode in a case that the second ringing message is not received and a communication connection between the second call processing apparatus and a base station fails, where the first broadcast message carries the second missed-call reminder information and called-party information corresponding to the first call processing apparatus, and the first broadcast message is used for instructing the second processing apparatus to send the second missed-call reminder information to the first call processing apparatus through the base station according to the called-party information.

Optionally, the radio frequency unit 1501 is further configured to send an indication message to the first processing apparatus through a base station in a case that the second ringing message is not received and a communication connection between the second call processing apparatus and the base station succeeds, where the indication message is used for instructing the first processing apparatus to send a second broadcast message according to a D2D communication mode.

The second broadcast message carries the second missed-call reminder information and called-party information corresponding to the first call processing apparatus, and the first processing apparatus is a communication apparatus capable of establishing a D2D connection with the first call processing apparatus in a cell with which the first call processing apparatus currently registers.

Optionally, the radio frequency unit 1501 is further configured to send a third broadcast message according to a D2D communication mode in a case that the second ringing message is not received, where the third broadcast message carries the second missed-call reminder information and called-party information corresponding to the first call processing apparatus, and the third broadcast message is used for instructing the second processing apparatus to send the second missed-call reminder information to the first call processing apparatus through the first processing apparatus according to the called-party information.

It is to be understood that, in this embodiment of this application, the input unit 1504 may include a graphics processing unit (Graphics Processing Unit, GPU) 15041 and a microphone 15042. The graphics processing unit 15041 performs processing on image data of a static picture or a video that is obtained by an image capture apparatus (for example, a camera) in a video capture mode or an image capture mode. The display unit 1506 may include a display panel 15061. The display panel 15061 may be configured in the form of a liquid crystal display, an organic light-emitting diode, or the like. The user input unit 1507 includes a touch panel 15071 and another input device 15072. The touch panel 15071 is also referred to as a touch screen. The touch panel 15071 may include two parts: a touch detection apparatus and a touch controller. The another input device 15072 may include, but not limited to, a physical keyboard, a functional key (such as a volume control key or a switch key), a track ball, a mouse, and a joystick. Details are not described herein again. The memory 1509 may be configured to store a software program and various data, including, but not limited to, application programs and an operating system. The processor 1510 may integrate an application processor and a modem processor. The application processor mainly processes an operating system, a user interface, an application program, and the like. The modem processor mainly processes wireless communication. It may be understood that the modem processor may not be integrated into the processor 1510.

An embodiment of this application further provides a readable storage medium. The readable storage medium may be non-volatile or volatile. The readable storage medium stores a program or an instruction. When the program or the instruction is executed by a processor, all processes in the embodiments of the call processing method are implemented, and the same technical effects can be achieved. To avoid repetition, details are not described herein again.

The processor is a processor in the electronic device in the above embodiments. The readable storage medium includes a computer-readable storage medium such as a computer read-only memory (Read-Only Memory, ROM), a random access memory (Random Access Memory, RAM), a magnetic disk, or an optical disc.

An embodiment of this application further provides a computer program product. The computer program product is stored in a non-transitory storage medium. The computer program product is executed by at least one processor to implement all processes in the embodiments of the call processing method, and the same technical effects can be achieved. To avoid repetition, details are not described herein again.

An embodiment of this application further provides a chip. The chip includes a processor and a communication interface, the communication interface is coupled to the processor, and the processor is configured to run a program or an instruction to implement all processes in the embodiments of the call processing method, and the same technical effects can be achieved. To avoid repetition, details are not described herein again.

It is to be understood that the chip as referred to in this embodiment of this application may alternatively be called a system-on-chip, a system chip, a chip system, a system-on-a-chip, or the like.

It is to be noted that, the terms "comprise", "include", and any other variants thereof are intended to cover non-exclusive inclusion, so that a process, a method, an article, or an apparatus that includes a series of elements not only includes the elements, but also includes other elements not expressly listed, or also includes elements inherent to this process, method, article, or apparatus. Without more limitations, an element defined by a phrase "including a/an ..." does not exclude presence of other identical elements in the process, method, article, or apparatus that includes the element.

According to the descriptions in the foregoing implementations, a person skilled in the art may clearly understand that the method in the foregoing embodiment may be implemented by software plus a necessary universal hardware platform or by hardware only. In most circumstances, the former is a preferred implementation. Based on such an understanding, the technical solutions of this application essentially, or the part contributing to the prior art may be presented in the form of a computer software product. The computer software product is stored in a storage medium (for example, a ROM/RAM, a magnetic disk, or an optical disc) including several instructions to enable a terminal (which may be a mobile phone, a computer, a server, a network device, or the like) to perform the methods described in the embodiments of this application.

## Claims

1. A call processing method, performed by a first call processing apparatus (801, 901, 1001), **characterized in that** the method comprising:
receiving (601) a first call request sent by a second call processing apparatus (802, 902, 1002);
establishing (602) a call connection with the second call processing apparatus (802, 902, 1002) according to the first call request;
receiving (603) second missed-call reminder information sent by the second call processing apparatus (802, 902, 1002) through a target processing apparatus in a case that the call connection is terminated; and
outputting (604) missed-call reminder information according to the second missed-call reminder information;
wherein the target processing apparatus comprises at least one of following: a first processing apparatus (903, 1003) capable of establishing a device-to-device, D2D, connection with the first call processing apparatus (801, 901, 1001), and a second processing apparatus (803, 1004) capable of establishing a D2D connection with the second call processing apparatus (802, 902, 1002).

2. The method according to claim 1, wherein the method further comprises:
detecting a first ringing message corresponding to the first call request in the case that the call connection is terminated;
obtaining first call information of the second call processing apparatus (802, 902, 1002) according to the first call request in a case that the first ringing message is not detected, wherein the first call information comprises a calling-party number; and
querying a preset database for calling-party information corresponding to the calling-party number, wherein the calling-party information comprises at least one of following: calling-party name information, calling-party home location information, and calling-party social account information; and
the outputting (604) missed-call reminder information according to the second missed-call reminder information comprises:
generating third missed-call reminder information based on the second missed-call reminder information, the calling-party information, and the first call information; and
displaying the third missed-call reminder information.

3. A call processing method, performed by a second call processing apparatus (802, 902, 1002), **characterized in that** the method comprising:
sending (701) a first call request to a first call processing apparatus (801, 901, 1001), wherein the first call request is used for establishing a call connection with the first call processing apparatus (801, 901, 1001);
detecting (702), in a case that the call connection is terminated, whether a second ringing message is received, wherein the second ringing message is sent by the first call processing apparatus (801, 901, 1001) based on the first call request; and
sending (703) second missed-call reminder information to the first call processing apparatus (801, 901, 1001) through a target processing apparatus in a case that the second ringing message is not received;
wherein the target processing apparatus comprises at least one of following: a first processing apparatus (903, 1003) capable of establishing a device-to-device, D2D, connection with the first call processing apparatus (801, 901, 1001), and a second processing apparatus (803, 1004) capable of establishing a D2D connection with the second call processing apparatus (802, 902, 1002).

4. The method according to claim 3, wherein the sending (703) second missed-call reminder information to the first call processing apparatus (801) through a target processing apparatus in a case that the second ringing message is not received comprises:
sending a first broadcast message according to a D2D communication mode in a case that the second ringing message is not received and a communication connection between the second call processing apparatus (802) and a base station fails, wherein the first broadcast message carries the second missed-call reminder information and called-party information corresponding to the first call processing apparatus (801), and the first broadcast message is used for instructing the second processing apparatus (803) to send the second missed-call reminder information to the first call processing apparatus (801) through the base station according to the called-party information.

5. The method according to claim 3, wherein the sending (703) second missed-call reminder information to the first call processing apparatus (901) through a target processing apparatus in a case that the second ringing message is not received comprises:
sending an indication message to the first processing apparatus (903) through a base station in a case that the second ringing message is not received and a communication connection between the second call processing apparatus (902) and the base station succeeds, wherein the indication message is used for instructing the first processing apparatus (903) to send a second broadcast message according to a D2D communication mode;
wherein the second broadcast message carries the second missed-call reminder information and called-party information corresponding to the first call processing apparatus (901), and the first processing apparatus (903) is a communication apparatus capable of establishing a D2D connection with the first call processing apparatus (901) in a cell with which the first call processing apparatus (901) currently registers.

6. The method according to claim 3, wherein the sending (703) second missed-call reminder information to the first call processing apparatus (1001) through a target processing apparatus in a case that the second ringing message is not received comprises:
sending a third broadcast message according to a D2D communication mode in the case that the second ringing message is not received, wherein the third broadcast message carries the second missed-call reminder information and called-party information corresponding to the first call processing apparatus (1001), and the third broadcast message is used for instructing the second processing apparatus (1004) to send the second missed-call reminder information to the first call processing apparatus (1001) through the first processing apparatus (1003) according to the called-party information.

7. An electronic device (1500), comprising a processor (1510), a memory (1509), and a program or an instruction stored in the memory (1509) and executable on the processor (1510), wherein, when the program or the instruction is executed by the processor (1510), steps of the call processing method according to claim 1 or 2 are implemented; or, when the program or the instruction is executed by the processor (1510), steps of the call processing method according to any one of claims 3 to 6 are implemented.

8. A readable storage medium, the readable storage medium storing a program or an instruction, wherein, when the program or the instruction is executed by a processor (1510), steps of the call processing method according to claim 1 or 2 are implemented; or, when the program or the instruction is executed by a processor (1510), steps of the call processing method according to any one of claims 3 to 6 are implemented.

9. A chip, comprising a processor and a communication interface, wherein the communication interface is coupled to the processor, and the processor is configured to run a program or an instruction to implement steps of the call processing method according to claim 1 or 2; or the processor is configured to run a program or an instruction to implement steps of the call processing method according to any one of claims 3 to 6.

10. A computer program product, wherein the computer program product is stored in a non-volatile readable storage medium, and the computer program product is executed by at least one processor (1510) to implement steps of the call processing method according to claim 1 or 2; or, the computer program product is executed by at least one processor (1510) to implement steps of the call processing method according to any one of claims 3 to 6.

## Patentansprüche

1. Ein Anrufverarbeitungsverfahren, das von einer ersten Anrufverarbeitungsvorrichtung (801, 901, 1001) durchgeführt wird, **dadurch gekennzeichnet, dass** das Verfahren Folgendes beinhaltet:
Empfangen (601) einer ersten Anrufanforderung, die von einer zweiten Anrufverarbeitungsvorrichtung (802, 902, 1002) gesendet wird;
Herstellen (602) einer Anrufverbindung mit der zweiten Anrufverarbeitungsvorrichtung (802, 902, 1002) gemäß der ersten Anrufanforderung;
Empfangen (603) zweiter Erinnerungsinformationen über einen verpassten Anruf, die von der zweiten Anrufverarbeitungsvorrichtung (802, 902, 1002) über eine Zielverarbeitungsvorrichtung gesendet werden, falls die Anrufverbindung abgebrochen wird; und
Ausgeben (604) von Erinnerungsinformationen über einen verpassten Anruf gemäß den zweiten Erinnerungsinformationen über einen verpassten Anruf;
wobei die Zielverarbeitungsvorrichtung mindestens eines der Folgenden beinhaltet:
eine erste Verarbeitungsvorrichtung (903, 1003), die in der Lage ist, eine Gerät-zu-Gerät-, D2D-, Verbindung mit der ersten Anrufverarbeitungsvorrichtung (801, 901, 1001) herzustellen, und eine zweite Verarbeitungsvorrichtung (803, 1004), die in der Lage ist, eine D2D-Verbindung mit der zweiten Anrufverarbeitungsvorrichtung (802, 902, 1002) herzustellen.

2. Verfahren gemäß Anspruch 1, wobei das Verfahren ferner Folgendes beinhaltet:
Erfassen einer ersten Klingelnachricht, die der ersten Anrufanforderung entspricht, falls die Anrufverbindung abgebrochen wird;
Erhalten von ersten Anrufinformationen der zweiten Anrufverarbeitungsvorrichtung (802, 902, 1002) gemäß der ersten Anrufanforderung, falls die erste Klingelnachricht nicht erfasst wird, wobei die ersten Anrufinformationen eine Nummer eines anrufenden Teilnehmers beinhalten; und
Abfragen einer voreingestellten Datenbank nach Informationen des anrufenden Teilnehmers, die der Nummer des anrufenden Teilnehmers entsprechen, wobei die Informationen des anrufenden Teilnehmers mindestens eines der Folgenden beinhalten: Namensinformationen des anrufenden Teilnehmers,
Heimstandortinformationen des anrufenden Teilnehmers und Sozialkontoinformationen des anrufenden Teilnehmers; und
das Ausgeben (604) von Erinnerungsinformationen über einen verpassten Anruf gemäß den zweiten Erinnerungsinformationen über einen verpassten Anruf Folgendes beinhaltet:
Erzeugen dritter Erinnerungsinformationen über einen verpassten Anruf basierend auf den zweiten Erinnerungsinformationen über einen verpassten Anruf, den Informationen des anrufenden Teilnehmers und den ersten Anrufinformationen; und
Anzeigen der dritten Erinnerungsinformationen über einen verpassten Anruf.

3. Ein Anrufverarbeitungsverfahren, das von einer zweiten Anrufverarbeitungsvorrichtung (802, 902, 1002) durchgeführt wird, **dadurch gekennzeichnet, dass** das Verfahren Folgendes beinhaltet:
Senden (701) einer ersten Anrufanforderung an eine erste
Anrufverarbeitungsvorrichtung (801, 901, 1001), wobei die erste Anrufanforderung zum Herstellen einer Anrufverbindung mit der ersten Anrufverarbeitungsvorrichtung (801, 901, 1001) verwendet wird;
Erfassen (702), falls die Anrufverbindung abgebrochen wird, ob eine zweite Klingelnachricht empfangen wird, wobei die zweite Klingelnachricht von der ersten Anrufverarbeitungsvorrichtung (801, 901, 1001) basierend auf der ersten Anrufanforderung gesendet wird; und
Senden (703) zweiter Erinnerungsinformationen über einen verpassten Anruf an die erste Anrufverarbeitungsvorrichtung (801, 901, 1001) über eine Zielverarbeitungsvorrichtung, falls die zweite Klingelnachricht nicht empfangen wird;
wobei die Zielverarbeitungsvorrichtung mindestens eines der Folgenden beinhaltet:
eine erste Verarbeitungsvorrichtung (903, 1003), die in der Lage ist, eine Gerät-zu-Gerät-, D2D-, Verbindung mit der ersten Anrufverarbeitungsvorrichtung (801, 901, 1001) herzustellen, und eine zweite Verarbeitungsvorrichtung (803, 1004), die in der Lage ist, eine D2D-Verbindung mit der zweiten Anrufverarbeitungsvorrichtung (802, 902, 1002) herzustellen.

4. Verfahren gemäß Anspruch 3, wobei das Senden (703) zweiter Erinnerungsinformationen über einen verpassten Anruf an die erste Anrufverarbeitungsvorrichtung (801) über eine Zielverarbeitungsvorrichtung, falls die zweite Klingelnachricht nicht empfangen wird, Folgendes beinhaltet:
Senden einer ersten Rundsendenachricht gemäß einem D2D-Kommunikationsmodus, falls die zweite Klingelnachricht nicht empfangen wird und eine Kommunikationsverbindung zwischen der zweiten Anrufverarbeitungsvorrichtung (802) und einer Basisstation fehlschlägt, wobei die erste Rundsendenachricht die zweiten Erinnerungsinformationen über einen verpassten Anruf und Informationen des angerufenen Teilnehmers, die der ersten Anrufverarbeitungsvorrichtung (801) entsprechen, trägt und die erste Rundsendenachricht verwendet wird, um die zweite Verarbeitungsvorrichtung (803) anzuweisen, die zweiten Erinnerungsinformationen über einen verpassten Anruf an die erste Anrufverarbeitungsvorrichtung (801) über die Basisstation gemäß den Informationen des angerufenen Teilnehmers zu senden.

5. Verfahren gemäß Anspruch 3, wobei das Senden (703) zweiter Erinnerungsinformationen über einen verpassten Anruf an die erste Anrufverarbeitungsvorrichtung (901) über eine Zielverarbeitungsvorrichtung, falls die zweite Klingelnachricht nicht empfangen wird, Folgendes beinhaltet:
Senden einer Hinweisnachricht an die erste Verarbeitungsvorrichtung (903) über eine Basisstation, falls die zweite Klingelnachricht nicht empfangen wird und eine Kommunikationsverbindung zwischen der zweiten Anrufverarbeitungsvorrichtung (902) und der Basisstation erfolgreich ist, wobei die Hinweisnachricht verwendet wird, um die erste Verarbeitungsvorrichtung (903) anzuweisen, eine zweite Rundsendenachricht gemäß einem D2D-Kommunikationsmodus zu senden;
wobei die zweite Rundsendenachricht die zweiten Erinnerungsinformationen über einen verpassten Anruf und Informationen des angerufenen Teilnehmers, die der ersten Anrufverarbeitungsvorrichtung (901) entsprechen, trägt und die erste Verarbeitungsvorrichtung (903) eine Kommunikationsvorrichtung ist, die in der Lage ist, eine D2D-Verbindung mit der ersten Anrufverarbeitungsvorrichtung (901) in einer Zelle herzustellen, an der sich die erste Anrufverarbeitungsvorrichtung (901) aktuell anmeldet.

6. Verfahren gemäß Anspruch 3, wobei das Senden (703) zweiter Erinnerungsinformationen über einen verpassten Anruf an die erste Anrufverarbeitungsvorrichtung (1001) über eine Zielverarbeitungsvorrichtung, falls die zweite Klingelnachricht nicht empfangen wird, Folgendes beinhaltet:
Senden einer dritten Rundsendenachricht gemäß einem D2D-Kommunikationsmodus, falls die zweite Klingelnachricht nicht empfangen wird, wobei die dritte Rundsendenachricht die zweiten Erinnerungsinformationen über einen verpassten Anruf und Informationen des angerufenen Teilnehmers, die der ersten Anrufverarbeitungsvorrichtung (1001) entsprechen, trägt und die dritte Rundsendenachricht verwendet wird, um die zweite Verarbeitungsvorrichtung (1004) anzuweisen, die zweiten Erinnerungsinformationen über einen verpassten Anruf an die erste Anrufverarbeitungsvorrichtung (1001) über die erste Verarbeitungsvorrichtung (1003) gemäß den Informationen des angerufenen Teilnehmers zu senden.

7. Ein elektronisches Gerät (1500), das einen Prozessor (1510), einen Speicher (1509) und ein Programm oder eine Anweisung, das/die in dem Speicher (1509) gespeichert ist und auf dem Prozessor (1510) ausführbar ist, beinhaltet, wobei, wenn das Programm oder die Anweisung von dem Prozessor (1510) ausgeführt wird, Schritte des Anrufverarbeitungsverfahrens gemäß Anspruch 1 oder 2 implementiert werden; oder, wenn das Programm oder die Anweisung von dem Prozessor (1510) ausgeführt wird, Schritte des Anrufverarbeitungsverfahrens gemäß einem der Ansprüche 3 bis 6 implementiert werden.

8. Ein lesbares Speichermedium, wobei das lesbare Speichermedium ein Programm oder eine Anweisung speichert, wobei, wenn das Programm oder die Anweisung von einem Prozessor (1510) ausgeführt wird, Schritte des Anrufverarbeitungsverfahrens gemäß Anspruch 1 oder 2 implementiert werden; oder, wenn das Programm oder die Anweisung von einem Prozessor (1510) ausgeführt wird, Schritte des Anrufverarbeitungsverfahrens gemäß einem der Ansprüche 3 bis 6 implementiert werden.

9. Ein Chip, der einen Prozessor und eine Kommunikationsschnittstelle beinhaltet, wobei die Kommunikationsschnittstelle mit dem Prozessor gekoppelt ist und der Prozessor konfiguriert ist, um ein Programm oder eine Anweisung abzuarbeiten, um Schritte des Anrufverarbeitungsverfahrens gemäß Anspruch 1 oder 2 zu implementieren; oder der Prozessor konfiguriert ist, um ein Programm oder eine Anweisung abzuarbeiten, um Schritte des Anrufverarbeitungsverfahrens gemäß einem der Ansprüche 3 bis 6 zu implementieren.

10. Ein Computerprogrammprodukt, wobei das Computerprogrammprodukt in einem nichtflüchtigen lesbaren Speichermedium gespeichert ist und das Computerprogrammprodukt von mindestens einem Prozessor (1510) ausgeführt wird, um Schritte des Anrufverarbeitungsverfahrens gemäß Anspruch 1 oder 2 zu implementieren; oder das Computerprogrammprodukt von mindestens einem Prozessor (1510) ausgeführt wird, um Schritte des Anrufverarbeitungsverfahrens gemäß einem der Ansprüche 3 bis 6 zu implementieren.

## Revendications

1. Un procédé de traitement d'appel, réalisé par un premier appareil de traitement d'appel (801, 901, 1001), **caractérisé en ce que** le procédé comprend :
la réception (601) d'une première demande d'appel envoyée par un deuxième appareil de traitement d'appel (802, 902, 1002) ;
l'établissement (602) d'une connexion d'appel avec le deuxième appareil de traitement d'appel (802, 902, 1002) en fonction de la première demande d'appel ;
la réception (603) de deuxièmes informations d'avis d'appel manqué envoyées par le deuxième appareil de traitement d'appel (802, 902, 1002) par l'intermédiaire d'un appareil de traitement cible dans un cas où il est mis fin à la connexion d'appel ; et
la délivrance en sortie (604) d'informations d'avis d'appel manqué en fonction des deuxièmes informations d'avis d'appel manqué ;
où l'appareil de traitement cible comprend au moins l'un des éléments suivants : un premier appareil de traitement (903, 1003) capable d'établir une connexion de dispositif à dispositif, D2D, avec le premier appareil de traitement d'appel (801, 901, 1001), et un deuxième appareil de traitement (803, 1004) capable d'établir une connexion D2D avec le deuxième appareil de traitement d'appel (802, 902, 1002).

2. Le procédé selon la revendication 1, le procédé comprenant en outre :
la détection d'un premier message de sonnerie correspondant à la première demande d'appel dans le cas où il est mis fin à la connexion d'appel ;
l'obtention de premières informations d'appel du deuxième appareil de traitement d'appel (802, 902, 1002) en fonction de la première demande d'appel dans un cas où le premier message de sonnerie n'est pas détecté, où les premières informations d'appel comprennent un numéro de partie appelante ; et
l'interrogation d'une base de données prédéfinie pour obtenir des informations de partie appelante correspondant au numéro de partie appelante, où les informations de partie appelante comprennent au moins l'un des éléments suivants : des informations de nom de partie appelante, des informations d'emplacement de rattachement de partie appelante, et des informations de compte social de partie appelante ; et
la délivrance en sortie (604) d'informations d'avis d'appel manqué en fonction des deuxièmes informations d'avis d'appel manqué comprend :
la génération de troisièmes informations d'avis d'appel manqué sur la base des deuxièmes informations d'avis d'appel manqué, des informations de partie appelante, et des premières informations d'appel ; et
l'affichage des troisièmes informations d'avis d'appel manqué.

3. Un procédé de traitement d'appel, réalisé par un deuxième appareil de traitement d'appel (802, 902, 1002), **caractérisé en ce que** le procédé comprend :
l'envoi (701) d'une première demande d'appel à un premier appareil de traitement d'appel (801, 901, 1001), où la première demande d'appel est utilisée pour établir une connexion d'appel avec le premier appareil de traitement d'appel (801, 901, 1001) ;
la détection (702), dans un cas où il est mis fin à la connexion d'appel, de la réception ou non d'un deuxième message de sonnerie, où le deuxième message de sonnerie est envoyé par le premier appareil de traitement d'appel (801, 901, 1001) sur la base de la première demande d'appel ; et
l'envoi (703) de deuxièmes informations d'avis d'appel manqué au premier appareil de traitement d'appel (801, 901, 1001) par l'intermédiaire d'un appareil de traitement cible dans un cas où le deuxième message de sonnerie n'est pas reçu ;
où l'appareil de traitement cible comprend au moins l'un des éléments suivants : un premier appareil de traitement (903, 1003) capable d'établir une connexion de dispositif à dispositif, D2D, avec le premier appareil de traitement d'appel (801, 901, 1001), et un deuxième appareil de traitement (803, 1004) capable d'établir une connexion D2D avec le deuxième appareil de traitement d'appel (802, 902, 1002).

4. Le procédé selon la revendication 3, où l'envoi (703) de deuxièmes informations d'avis d'appel manqué au premier appareil de traitement d'appel (801) par l'intermédiaire d'un appareil de traitement cible dans un cas où le deuxième message de sonnerie n'est pas reçu comprend :
l'envoi d'un premier message de diffusion en fonction d'un mode de communication D2D dans un cas où le deuxième message de sonnerie n'est pas reçu et où une connexion de communication entre le deuxième appareil de traitement d'appel (802) et
une station de base échoue, où le premier message de diffusion transporte les deuxièmes informations d'avis d'appel manqué et des informations de partie appelée correspondant au premier appareil de traitement d'appel (801), et le premier message de diffusion est utilisé pour donner instruction au deuxième appareil de traitement (803) d'envoyer les deuxièmes informations d'avis d'appel manqué au premier appareil de traitement d'appel (801) par l'intermédiaire de la station de base en fonction des informations de partie appelée.

5. Le procédé selon la revendication 3, où l'envoi (703) de deuxièmes informations d'avis d'appel manqué au premier appareil de traitement d'appel (901) par l'intermédiaire d'un appareil de traitement cible dans un cas où le deuxième message de sonnerie n'est pas reçu comprend :
l'envoi d'un message d'indication au premier appareil de traitement (903) par l'intermédiaire d'une station de base dans un cas où le deuxième message de sonnerie n'est pas reçu et où une connexion de communication entre le deuxième appareil de traitement d'appel (902) et la station de base réussit, où le message d'indication est utilisé pour donner instruction au premier appareil de traitement (903) d'envoyer un deuxième message de diffusion en fonction d'un mode de communication D2D ;
où le deuxième message de diffusion transporte les deuxièmes informations d'avis d'appel manqué et des informations de partie appelée correspondant au premier appareil de traitement d'appel (901), et le premier appareil de traitement (903) est un appareil de communication capable d'établir une connexion D2D avec le premier appareil de traitement d'appel (901) dans une cellule auprès de laquelle le premier appareil de traitement d'appel (901) s'enregistre actuellement.

6. Le procédé selon la revendication 3, où l'envoi (703) de deuxièmes informations d'avis d'appel manqué au premier appareil de traitement d'appel (1001) par l'intermédiaire d'un appareil de traitement cible dans un cas où le deuxième message de sonnerie n'est pas reçu comprend :
l'envoi d'un troisième message de diffusion en fonction d'un mode de communication D2D dans le cas où le deuxième message de sonnerie n'est pas reçu, où le troisième message de diffusion transporte les deuxièmes informations d'avis d'appel manqué et
des informations de partie appelée correspondant au premier appareil de traitement d'appel (1001), et le troisième message de diffusion est utilisé pour donner instruction au deuxième appareil de traitement (1004) d'envoyer les deuxièmes informations d'avis d'appel manqué au premier appareil de traitement d'appel (1001) par l'intermédiaire du premier appareil de traitement (1003) en fonction des informations de partie appelée.

7. Un dispositif électronique (1500), comprenant un processeur (1510), une mémoire (1509), et un programme ou une instruction stockés dans la mémoire (1509) et exécutables sur le processeur (1510), où, lorsque le programme ou l'instruction sont exécutés par le processeur (1510), des étapes du procédé de traitement d'appel selon la revendication 1 ou la revendication 2 sont mises en œuvre ; ou, lorsque le programme ou l'instruction sont exécutés par le processeur (1510), des étapes du procédé de traitement d'appel selon l'une quelconque des revendications 3 à 6 sont mises en oeuvre.

8. Un support de stockage lisible, le support de stockage lisible stockant un programme ou une instruction, où, lorsque le programme ou l'instruction sont exécutés par un processeur (1510), des étapes du procédé de traitement d'appel selon la revendication 1 ou la revendication 2 sont mises en œuvre ; ou, lorsque le programme ou l'instruction sont exécutés par un processeur (1510), des étapes du procédé de traitement d'appel selon l'une quelconque des revendications 3 à 6 sont mises en œuvre.

9. Une puce, comprenant un processeur et une interface de communication, où l'interface de communication est couplée au processeur, et le processeur est configuré pour lancer un programme ou une instruction afin de mettre en œuvre des étapes du procédé de traitement d'appel selon la revendication 1 ou la revendication 2 ; ou le processeur est configuré pour lancer un programme ou une instruction afin de mettre en œuvre des étapes du procédé de traitement d'appel selon l'une quelconque des revendications 3 à 6.

10. Un produit de programme d'ordinateur, le produit de programme d'ordinateur étant stocké dans un support de stockage lisible non volatil, et le produit de programme d'ordinateur étant exécuté par au moins un processeur (1510) afin de mettre en œuvre des étapes du procédé de traitement d'appel selon la revendication 1 ou la revendication 2 ; ou, le produit de programme d'ordinateur étant exécuté par au moins un processeur (1510) afin de mettre en œuvre des étapes du procédé de traitement d'appel selon l'une quelconque des revendications 3 à 6.
